# EUROPÄISCHE PATENTSCHRIFT

(11) **EP 3 927 959 B1**
(45) Veröffentlichungstag und Bekanntmachung des Hinweises auf die Patenterteilung: **11.02.2026**
(21) Anmeldenummer: 20708045.8
(22) Anmeldetag: 20.02.2020
(51) Int. Cl.: F03B 13/06, F04B 35/00

(54) **PUMPSPEICHERKRAFTWERK, VERFAHREN ZUM BETREIBEN EINES PUMPSPEICHERKRAFTWERKS UND PUMPSPEICHERSYSTEM**
PUMP STORAGE POWER PLANT, METHOD FOR OPERATING A PUMP STORAGE POWER PLANT, AND PUMP STORAGE SYSTEM
CENTRALE DE POMPAGE-TURBINAGE, PROCÉDÉ POUR FAIRE FONCTIONNER UNE CENTRALE DE POMPAGE-TURBINAGE ET SYSTÈME DE POMPAGE-TURBINAGE

(30) Priorität: 20.02.2019 DE 102019104306
(43) Veröffentlichungstag der Anmeldung: 29.12.2021
(73) Patentinhaber: Krack, Robin, 36391 Sinntal-Jossa (DE); Gärtner, Udo, 36391 Sinntal-Sannerz (DE)
(72) Erfinder: Krack, Robin, 36391 Sinntal-Jossa (DE); Gärtner, Udo, 36391 Sinntal-Sannerz (DE)
(74) Vertreter: Schmid, Nils T.F.
(86) Internationale Anmeldenummer: PCT/EP2020/054460
(87) Internationale Veröffentlichungsnummer: WO 2020/169720

(56) Entgegenhaltungen:
- CN-B- 102 954 050
- DE-A1- 102008 040 393
- JP-U- S6 365 865
- US-A- 4 206 608
- US-A1- 2007 130 929
- US-A1- 2008 012 344
- US-A1- 2015 056 085

## Beschreibung

Die vorliegende Erfindung betrifft ein Pumpspeicherkraftwerk. Des Weiteren betrifft die vorliegende Erfindung ein Verfahren zum Betreiben eines Pumpspeicherkraftwerks. Ferner stellt die vorliegende Erfindung ein Pumpspeichersystem bereit.

Aufgrund der Endlichkeit fossiler Energieträger steigen der Bedarf an und die Nachfrage nach erneuerbaren Energien. Anders als bei konventionellen Energieerzeugern, wie Kraftwerken, ist die Energieerzeugung mittels erneuerbarer Energiequellen unregelmäßig und hängt beispielsweise von der Wetterlage ab. Dies bringt zahlreiche Herausforderungen mit sich. Der mittels der erneuerbaren Energiequellen gewonnene Ökostrom kann beispielsweise zu einem Überschuss vorliegen. Andererseits besteht abhängig von den klimatischen Bedingungen und der damit einhergehenden stark fluktuierenden Verfügbarkeit von Wind- und Sonnenenergie die Problematik, dass oftmals zu wenig Ökostrom zur Verfügung steht und erneut auf die fossilen Energieträger zurückgegriffen werden muss. Die allgemeine Zielsetzung liegt darin, einen Ökostromüberschuss in ausreichender Menge vorrübergehend in der Weise zu speichern, dass er zu einem bestimmten Zeitpunkt einer Überlastung im Netz oder bei klimatischen Bedingungen, bei denen kein Ökostrom generiert werden kann, wirtschaftlich wieder zur Verfügung gestellt werden kann. Aufgrund der weltweit begrenzten Energie-/Stromspeichermöglichkeiten ausreichender Größe und Wirtschaftlichkeit wird weiterhin nach neuen Lösungen gesucht.

Von den bisher bekannten Speicherkonzepten, Pumpspeicherkraftwerk, Batterien, Druckluftspeicher, Schwungradspeicher und Thermospeicher, haben sich insbesondere Pumpspeicherwerke ausgezeichnet. Diese pumpen von einem niedriger liegenden Wasserreservoir (Unterwasser) Wasser in Zeiten niedrigen Stromverbrauchs, beispielsweise nachts, in ein höher gelegenes Reservoir (Oberwasser), wo es gespeichert wird. Um Stromspitzen bedienen zu können und die gespeicherte Energie wieder zur Verfügung zu stellen, wird das Oberwasser mit der erhöhten Energie über stromerzeugende Turbinenaggregate in das Unterwasser zurückgeleitet, um Strom zu generieren. Die geografischen Möglichkeiten für solche Pumpspeicherwerke sind weltweit stark limitiert.

DE 10 2014 016 640 A1 offenbart ein unterirdisches Schwerkraft-Pumpspeichersystem zur Speicherung von elektrischer Energie. Dabei ist ein auf- und abbewegbarer Kolben abgedichtet in einem hermetisch abgedichteten, unterirdischen Wasserschacht angeordnet. Mittels einer Turbinen-Pumpen-Anordnung kann das Wasser in dem Wasserschacht derart gefördert werden, dass der Kolben angehoben und abgesenkt werden kann. Zum Speichern von Energie wird Wasser unter den Kolben gepumpt, um diesen entgegen der Schwerkraft, d. h. der Gewichtskraft des Kolbens, anzuheben und dadurch potentielle Energie zu erzeugen. Zum Umwandeln der potentiellen Energie in elektrische Energie wird der Kolben zurück in die abgesenkte Position bewegt, wodurch Wasser zurück zur Turbinen-Pumpen-Anordnung befördert wird und dabei die Turbine antreibt, mittels welcher ein Generator betreibbar ist.

US 2008/012344 A1 beschreibt ein Pumpspeicherkraftwerk umfassend: einen in ein Arbeitsfluidreservoir teilweise eingetauchten Arbeitszylinder mit einem Oberfluidabteil im Wesentlichen oberhalb eines Fluidspiegels des Arbeitsfluidreservoirs und einem Unterfluidabteil unterhalb des Fluidspiegels; einen Auftriebskolben, der gegenüber dem Arbeitszylinder in Gravitationsrichtung beweglich geführt ist und derart das Oberfluidabteil von dem Unterfluidabteil abdichtet, dass ein gravitationsbedingter Fluidaustausch zwischen Oberfluidabteil und Unterfluidabteil verhindert ist; einen Energieladebetrieb, in dem Luft in das Oberfluidabteil eingelassen wird, sodass der Auftriebskolben bezüglich des Fluidspiegels in das Unterfluidabteil eingetaucht wird; und einen Energieabgabebetrieb, in dem eine während des Energieladebetriebs aufgebaute Luftsäule des Oberfluids abfließt.

Schließlich offenbart DE 10 2008 040393 A1 ein anderes Pumpspeicherkraftwerk umfassend: einen Arbeitszylinder mit einem Arbeitsfluidabteil und einem Konterarbeitsabteil, einen Arbeitskolben, der gegenüber dem Arbeitszylinder in einer Arbeitsrichtung bewegbar ist und derart das Arbeitsfluidabteil von dem Konterarbeitsabteil abdichtet, dass Fluidaustausch zwischen Arbeitsfluidabteil und Konterarbeitsabteil verhindert ist; einen Energieladebetrieb, in dem Fluid in das Arbeitsfluidabteil eingelassen wird, sodass unter dem Einfluss des Fluiddrucks der Arbeitskolben in das Konterarbeitsabteil unter Spannen einer Elastizitätskomponente am Arbeitskolben in ein in das Konterarbeitsabteil gefülltes Konterarbeitsfluid, bewegt wird; und einen Energieabgabebetrieb, in dem unter dem Einfluss der Spannkraft des gespannten Arbeitskolbens Arbeitsfluid aus dem Arbeitsfluidabteil herausgedrückt wird.

Nachteilig an dem derartigen Pumpspeichersystem ist der hohe benötigte unterirdische Bauraumbedarf. Insbesondere um hohe Energiespeicherkapazitäten bereitzustellen, sind sehr große Tiefen für das Pumpspeichersystem nötig. Des Weiteren hat sich als nachteilig erwiesen, dass die Pumpe sehr leistungsfähig sein muss, um den Kolben entgegen seiner Gewichtskraft mittels der Wasserdruckkraft anzuheben. Dadurch ist das derartige Pumpspeichersystem ausfallanfällig.

Es ist Aufgabe der vorliegenden Erfindung, die Nachteile aus dem bekannten Stand der Technik zu verbessern, insbesondere ein effizientes Pumpspeicherkraftwerk, ein Verfahren zum Betreiben eines Pumpspeicherkraftwerks und ein Pumpspeichersystem bereitzustellen, das auf konstruktiv einfache Weise skalierbar ist, um auch für hohe Energiespeicherkapazitäten einsetzbar zu sein, und weniger fehleranfällig ist.

Die Aufgabe wird durch den Gegenstand von Anspruch 1, 8, 12 und 13 gelöst.

Danach ist ein Pumpspeicherkraftwerk bereitgestellt. Ein Pumpspeicherkraftwerk ist am Allgemeinen ein Energiespeicher, der Energie in Form von potentieller Energie speichert, welche in Form von elektrischer Energie wieder zur Verfügung gestellt werden kann. Insbesondere kann vorgesehen sein, die zu speichernde elektrische Energie dazu zu verwenden, ein hohes Energiepotential aufzubauen, wobei die elektrische Energie zunächst in kinetische Energie des verwendeten Arbeitsfluids und schließlich in potentielle Energie umgewandelt wird. Um bei Bedarf die gespeicherte Energie wieder nutzen zu können, wird der Vorgang umgekehrt durchgeführt, das heißt die gespeicherte potentielle Energie des Arbeitsfluids zunächst in kinetische Energie und schließlich in elektrische Energie umgewandelt. Das erfindungsgemäße Pumpspeicherkraftwerk kann als Onshore-Pumpenspeicherkraftwerk zur Verwendung bzw. Installation an Land oder als Offshore-Pumpenspeicherkraftwerk zur Verwendung bzw. Installation in einem Gewässer, wie einem Meer, ausgebildet sein.

Das erfindungsgemäße Pumpspeicherkraftwerk umfasst einen in ein Arbeitsfluidreservoir, wie einen Wasserspeicher, beispielsweise eine Regentonne, oder ein Gewässer, wie ein See oder ein Meer, teilweise eingetauchten Arbeitszylinder mit einem Oberfluidabteil im Wesentlichen oberhalb eines Fluidspiegels des Arbeitsfluidreservoirs und einem Unterfluidabteil im Wesentlichen unterhalb des Fluidspiegels. Der Arbeitszylinder ist nicht auf eine bestimmte geometrische Form und/oder Dimensionierung beschränkt. Insbesondere im Hinblick auf auftretende hydrostatische Druckeinflüsse hat sich eine runde, vorzugsweise kreisrunde, Querschnittsform als vorteilhaft erwiesen. Im Hinblick auf die zu speichernde Energiemenge wurde bezüglich des Arbeitszylinders dessen Volumen als ausschlaggebender Einschlussfaktor identifiziert, das insbesondere von der Höhe des Arbeitszylinders und dessen Durchmesser abhängt. Insbesondere ist die Höhe des Arbeitszylinders entscheidend für die je Volumeneinheit zu speichernde potentielle Energiemenge, wobei die zu speichernde potentielle Energiemenge, die auch als Speicherkapazität bezeichnet werden kann, quadratisch mit einer Veränderung der Höhe des Arbeitszylinders skaliert. Des Weiteren skaliert das Arbeitszylinderinnenvolumen, also dessen Speicherkapazität, außerdem quadratisch mit dessen Radius. Folglich besteht ein Bestreben danach, möglichst große Arbeitszylinderabmessungen, insbesondere Arbeitszylinderhöhen und/oder Arbeitszylinderdurchmesser, vorzusehen. Der Arbeitszylinder ist teilweise in ein Arbeitsfluidreservoir eingetaucht, so dass sich ein Oberfluidabteil im Wesentlichen oberhalb des Fluidspiegels des Arbeitsfluidreservoirs befindet und zur Bereitstellung einer Speicherkapazität in dem Oberfluidabteil aus dem Arbeitsfluidreservoir herausragt. Das an das Oberfluidabteil anschließende, sich unterhalb des Fluidspiegels befindende und somit in das Arbeitsfluidreservoir eingetauchte Unterfluidabteil kann mit dem Arbeitsfluidreservoir in fluidaler Verbindung angeordnet sein, wobei ein Fluidspiegel außerhalb des Arbeitszylinders im Wesentlichen dem Fluidspiegel innerhalb des Arbeitszylinders, welcher das Oberfluidabteil von dem Unterfluidabteil separiert, entspricht.

Das erfindungsgemäße Pumpspeicherkraftwerk umfasst außerdem einen Auftriebskolben, der gegenüber dem Arbeitszylinder in Gravitationsrichtung beweglich geführt ist und derart das Oberfluidabteil von dem Unterfluidabteil abdichtet, das ein gravitationsbedingter Fluidaustausch zwischen Oberfluidabteil und Unterfluidabteil verhindert ist. Bei dem Auftriebskolben handelt es sich beispielsweise um einen Hohlkörper, insbesondere einen Hohlzylinder, dessen Form und/oder Dimensionierung beispielsweise an eine Innenabmessung des Arbeitszylinders angepasst ist, insbesondere derart angepasst ist, dass dieser das Oberfluidabteil von dem Unterfluidabteil fluiddicht trennt. Der Auftriebskolben kann beispielsweise aus einem Material hergestellt sein, das eine geringere Dichte als das in dem Arbeitsfluidreservoir befindliche und/oder zu speichernde Arbeitsfluid besitzt. Beispielsweise kommen Kunststoffe in Frage, die insbesondere aus sogenanntem Plastikmüll bestehen können. Unabhängig von der Materialwahl und dem verwendeten Arbeitsfluid ist sicherzustellen, dass der Auftriebskolben bezüglich des in dem Arbeitsfluidreservoir angeordneten Arbeitsfluids eine Auftriebskraft generiert, die vorzugsweise entgegengesetzt zu der auf den Auftriebskolben wirkenden Gravitationsrichtung orientiert ist. Dabei kann vorgesehen sein, dass der Arbeitszylinder zur Umgebung hin im Wesentlichen geschlossen und/oder abgedichtet ist, so dass sich in das Oberfluidabteil eingebrachtes Arbeitsfluid nicht ungewollt aus dem Oberfluidabteil entfernt.

In einem Energieladebetrieb des Pumpspeicherkraftwerks wird Arbeitsfluid in das Oberfluidabteil eingelassen. Als Arbeitsfluide kommen beispielsweise flüchtige Fluide, wie Helium, oder eine Flüssigkeit, wie Wasser, zum Einsatz. In dem Energieladebetrieb wird unter dem Einfluss der Gewichtskraft und/oder des hydrodynamischen Druckes des in das Oberfluidabteil eingelassenen Oberfluids der Auftriebskolben bezüglich des Fluidspiegels in das Unterfluidabteil eingetaucht. In einer beispielhaften Ausführung der vorliegenden Erfindung wird Arbeitsfluid kontinuierlich zum Befüllen des Oberfluidabteils in dieses eingelassen, wobei das in das Oberfluidabteil eingelassene bzw. eingebrachte Arbeitsfluid als Oberfluid bezeichnet wird. Während dem kontinuierlichen Einlassen bzw. Einbringen des Oberfluids in das Oberfluidabteil baut sich eine Fluidsäule, insbesondere Oberfluidsäule, in dem Oberfluidabteil auf. Das Oberfluidsäulenvolumen hängt dabei von einer Innenabmessung des Außenzylinders, insbesondere des Oberfluidabteils, sowie der entgegen der Auftriebsrichtung des Auftriebskolbens und in Gravitationsrichtung sich aufbauenden Oberfluidsäulenhöhe ab, welche eine Gewichtskraft auf den Auftriebskolben bewirkt. Der sich kontinuierlich in das Unterfluidabteil ein- bzw. untertauchende Auftriebskolben, insbesondere der ein- bzw. untertauchende Abschnitt des Auftriebskolbens, kann in seiner Längsabmessung im Wesentlichen einer Oberfluidsäulenhöhe entsprechen, bzw. sich entsprechend einer Veränderung der Oberfluidsäulenhöhe verändern. Beispielsweise wird der Auftriebskolben unter dem Einfluss des hydrostatischen Druckes, der auch Gravitationsdruck genannt wird, des Oberfluids infolge des Einflusses der Gravitation in das Unterfluidabteil eingetaucht. Zusätzlich oder alternativ kann ein hydrodynamischer Druck des eingelassenen Oberfluids genutzt werden, um den Auftriebskolben in das Unterfluidabteil einzutauchen, der aus der kinetischen Energie des einströmenden Oberfluids resultiert und insbesondere von der Strömungsgeschwindigkeit und Dichte des einströmenden Oberfluids abhängt.

Das Pumpspeicherkraftwerk umfasst ferner einen Energieabgabebetrieb, in dem unter dem Einfluss der Auftriebskraft des Auftriebskolbens Oberfluid aus dem Oberfluidabteil herausgedrückt wird und/oder in dem eine während des Energieladebetriebs aufgebaute Fluidsäule, insbesondere die Oberfluidsäule, des Oberfluids vorzugsweise konstant aus dem Oberfluidabteil abfließt. Der Energieabgabebetrieb kann beispielsweise derart gestaltet sein, dass der Auftriebskolben vorzugsweise rein unter dem Einfluss der Auftriebskraft entgegen der Gravitationsrichtung aus dem Unterfluidabteil in Richtung des Oberfluidabteils bewegt wird, so dass das Oberfluid wenigstens teilweise aus dem Oberfluidabteil herausgedrückt wird. Dabei kann das herausgedrückte Oberfluid eine Wassersäule festlegen, dessen Höhe eine Verlagerung des Auftriebskolbens in Auftriebsrichtung festgelegt. Der Energieabgabebetrieb kann außerdem derart gestaltet sein, dass die aufgebaute Oberfluidsäule vorzugsweise konstant aus dem Oberfluidabteil abgelassen wird bzw. abfließen kann, wobei vorgesehen sein kann, dass das bereits abgeflossene, aus dem Oberfluidabteil sich entfernte Arbeitsfluid das restliche, noch in dem Oberfluidabteil angeordnete Oberfluid nachzieht, wobei insbesondere der bereits abgeflossene Arbeitsfluidanteil eine Sogwirkung bezüglich des noch in dem Oberfluidabteil angeordneten Oberfluids entfalten kann. Infolge des Abfließens des Oberfluids aus dem Oberfluidabteil reduziert sich eine auf den Auftriebskolben entgegen dessen Auftriebsrichtung wirkende Gewichtskraft des Oberfluids, so dass eine Auftriebskraft des Auftriebskolbens bezüglich des Arbeitsfluidreservoirs wenigstens kurzzeitig die Gewichtskraft des Oberfluids übersteigt und somit der Auftriebskolben entgegen der Gravitationsrichtung und damit in Auftriebsrichtung verlagert wird.

Das Pumpspeicherkraftwerk kann beispielsweise derart gestaltet sein, dass die Gewichtskraft des Oberfluids im Wesentlichen einer Auftriebskraft des Auftriebskolbens entspricht, so dass sich der Auftriebskolben im Gleichgewicht befindet. Gemäß einer Weiterbildung wird das Gleichgewicht zwischen Auftriebskolbenauftriebskraft und Oberfluidgewichtskraft lediglich in den Phasen des Übergangs zwischen Energieabgabebetrieb und Energieladebetrieb aufgehoben. Beispielsweise ist das Pumpspeicherkraftwerk derart eingestellt, dass in einem Bedarfsmoment, in dem die gespeicherte potentielle Energie wieder zur Verfügung gestellt werden soll, welche in Form des innerhalb des Oberfluidabteils angeordneten Oberfluids bzw. durch den in das Arbeitsfluidreservoir untergetauchten Auftriebskolben bereitgestellt ist, Oberfluid wenigstens teilweise abgelassen bzw. herausgedrückt wird. Die temporär überlegene Auftriebskraft des Auftriebskolbens bewirkt, dass dieser wenigstens teilweise wieder aus dem Unterfluidabteil auftaucht, bis sich erneut ein Gleichgewicht zwischen Oberfluidabteilgewichtskraft und Auftriebskolbenauftriebskraft einstellt, indem der Auftriebskolben zum Stillstand kommt, das heißt nicht weiter zwischen Oberfluidabteil und Unterfluidabteil verlagert wird. Gemäß dem erfindungsgemäßen Pumpspeicherkraftwerk steht die gespeicherte potentielle Energie bei Bedarf im Wesentlichen vollständig zur erneuten Umwandlung in elektrische Energie zur Verfügung. Aufgrund der einfachen Konfiguration der vorliegenden Erfindung lässt sich das Pumpspeicherkraftwerk auf einfache Weise beliebig skalieren, so dass entsprechend des Anwendungsfalls beliebige Speicherkapazitäten auf einfache Weise realisiert werden können, vorzugsweise durch einfache Skalierung des Pumpspeicherkraftwerks. Des Weiteren hat sich die Aufteilung des Arbeitszylinders in Oberfluidabteil und Unterfluidabteil im Hinblick auf dessen verringerten Bauraumbedarf im Bereich des Unterfluidabteils als vorteilhaft erwiesen. Außerdem wirkt sich die Ausnutzung der Auftriebskraft bzw. der Gewichtskraft gemäß der vorliegenden Erfindung vorteilhaft auf die Effizienz des Pumpspeicherkraftwerks aus, da insbesondere beim Einspeichern, also beim Einnehmen des Energieladebetriebs, wenig Energie aufzuwenden ist und/oder die zum Einspeichern verwendete Vorrichtung eine geringe Energieabgabeleistung besitzen muss.

Gemäß einer beispielhaften Ausführung der vorliegenden Erfindung ist zum Abdichten des Oberfluidabteils gegen das Unterfluidabteil wenigstens eine Dichtung zwischen Auftriebskolben und Arbeitszylinder vorzugsweise im Bereich des Fluidspiegels angeordnet. Beispielsweise kann eine Gruppe von mehreren Dichtungen im Bereich des Fluidspiegels angeordnet sein, um eine Verbesserung der Dichtigkeit und eine Redundanz beispielsweise beim Ausfall einer Dichtung bereitzustellen. Des Weiteren kann vorgesehen sein, dass die wenigstens eine Dichtung, oder wenigstens eine weitere Dichtung, im mittleren Bereich oder in der oberen Hälfte in Bezug auf eine Längserstreckung des Oberfluidabteils an diesem angeordnet ist. In einer beispielhaften Weiterbildung ist die wenigstens eine Dichtung derart aktivierbar, dass die wenigstens eine Dichtung den Auftriebskolben relativ zu dem Arbeitszylinder festhält, vorzugsweise in dem Energieladebetrieb und/oder in dem Energieabgabebetrieb des Pumpspeicherkraftwerks. Beispielsweise wird bei einer Aktivierung der Dichtung erreicht, dass eine Haltekraft zwischen Auftriebskolben und Arbeitszylinder aufgebaut wird. Die wenigstens eine Dichtung kann beispielsweise derart aktivierbar sein, dass die zwischen Arbeitszylinder und Auftriebskolben bestehende Haltekraft vorzugsweise stufenlos einstellbar ist. In einer deaktivierten Betriebssituation der wenigstens einen Dichtung kann die Reibungskraft zwischen Auftriebskolben und Arbeitszylinder im Wesentlichen aufgehoben sein oder es kann eine gewisse Reibungskraft während des Verlagerns des Auftriebskolbens relativ zu dem Arbeitszylinder aufrechterhalten bleiben. Die Aktivierung der Dichtung kann beispielsweise durch pneumatisches und/oder hydraulisches Beaufschlagen der Dichtung erfolgen. Beispielsweise ist die wenigstens eine Dichtung als Hohldichtung ausgeführt und/oder besitzt einen sich wenigstens abschnittsweise durch die Dichtung ersteckenden Hohlraum, welcher mit hydraulischem Medium oder pneumatisch beaufschlagbar ist, um die Dichtung zu aktivieren bzw. zu deaktivieren. Dabei kann die wenigstens eine Dichtung bzw. dessen Aktivierung derart realisiert sein, dass zum Aktivieren der Dichtung hydraulische Medium oder die Luft in die Hohldichtung, insbesondere dessen Hohlraum, eingebracht wird, um diese zu aktivieren. Zum Deaktivieren der Dichtung wird das hydraulische Medium bzw. die Luft wieder aus der wenigstens einen Dichtung bzw. dessen Hohlraum entfernt. Gemäß einer Weiterbildung können andere Prinzipien der Aktivierung der Dichtung angedacht sein, beispielsweise eine piezoelektrische oder eine elektromagnetische Aktivierung. Es kann beispielsweise vorgesehen sein, dass jede Dichtung individuell aktivierbar, insbesondere individuell hydraulisch und/oder pneumatisch, elektromechanisch oder piezoelektrisch beaufschlagbar ist. Gemäß einer beispielhaften Ausführung ist die wenigstens eine Dichtung umfänglich um den Auftriebskolben bzw. an einer Arbeitszylinderinnenwand angeordnet. Alternativ kann die wenigstens eine Dichtung derart realisiert und/oder angeordnet sein, dass diese nicht umlaufend gestaltet ist. In diesem Zusammenhang hat sich als vorteilhaft erwiesen, insbesondere um Leckageverluste zwischen Oberfluidabteil und Unterfluidabteil zu vermeiden, mehrere Dichtungen, welche nicht umlaufend gestaltet sind, versetzt zueinander anzuordnen, nach Art einer Labyrinthdichtung, wobei versetzt dahingehend zu verstehen sein kann, dass je zwei benachbarte Dichtungen sich in Verlagerungsrichtung des Auftriebskolbens betrachtet teilweise überlappen und teilweise übereinander in Umfangsrichtung hervorstehen. Das Profil der wenigstens einen Dichtung ist dabei nicht auf eine bestimmte Form beschränkt. Des Weiteren sind verschiedenste geeignete Werkstoffe möglich. Gemäß einer beispielhaften Weiterbildung der vorliegenden Erfindung kann die wenigstens eine Dichtung den Auftriebskolben relativ zu dem Arbeitszylinder stoffschlüssig, kraftschlüssig und/oder formschlüssig festhalten. Insbesondere die formschlüssige Verbindungskraft hat sich als vorteilhaft im Hinblick auf eine Stabilisierung des Pumpspeicherkraftwerks in dessen Energieladebetrieb (Speicherzustand) erwiesen.

Gemäß einer beispielhaften Weiterbildung des erfindungsgemäßen Pumpspeicherkraftwerks ist die wenigstens eine Dichtung in einer an einer Mantelinnenfläche des Arbeitszylinders und/oder einer Mantelaußenfläche des Auftriebskolbens ausgebildeten Nut aufgenommen. Beispielsweise ist die wenigstens eine Dichtung in der arbeitskolbenseitigen Nut aufgenommen, so dass sich die wenigstens eine Dichtung bei einer Verlagerung des Auftriebskolbens insbesondere zwischen Oberfluidabteil und Unterfluidabteil mit dem Auftriebskolben mitbewegt. Für den Fall, dass die wenigstens eine Dichtung in der arbeitszylinderseitigen Nut aufgenommen ist, bewegt sich die wenigstens eine Dichtung infolge einer Verlagerung des Auftriebskolbens insbesondere zwischen Unterfluidabteil und Oberfluidabteil nicht mit dem Auftriebskolben mit und/oder ist im Wesentlichen ortsfest angeordnet. Beispielsweise ist die wenigstens eine Dichtung derart realisiert, dass bei dessen Aktivierung sich die wenigstens eine Dichtung in Richtung des Auftriebskolbens und/oder des Arbeitszylinders ausdehnt, um eine Haltekraft, wie eine Reibungskraft und/oder eine formschlussbedingte Kraft, zwischen Auftriebskolben und Arbeitszylinder vorzugsweise kontinuierlich aufzubauen. Dadurch, dass die wenigstens eine Dichtung auftriebskolbenseitig oder arbeitszylinderseitig an einer Ausdehnung vorzugsweise in radialer Richtung bezüglich des Auftriebskolbens bzw. des Arbeitszylinders verhindert ist, dehnt sich die wenigstens eine Dichtung bei dessen Aktivierung in die jeweils andere Radialrichtung aus, insbesondere um sich im Zwischenraum zwischen Auftriebskolben und Arbeitszylinder unter Ausbildung einer Haltekraft zu verpressen. In einer beispielhaften Ausführung der vorliegenden Erfindung können Führungsrollen beispielsweise in Form von Rollenkränzen außenzylinderseitig und/oder auftriebskolbenseitig angeordnet sein, an welchen der Auftriebskolben und/oder der Arbeitszylinder bei einer Verlagerung des Auftriebskolbens zwischen Oberfluidabteil und Unterfluidabteil abrollen kann. Dadurch lässt sich der Verschleiß an dem erfindungsgemäßen Pumpspeicherkraftwerk reduzieren, insbesondere der aufgrund der Relativbewegung zwischen Auftriebskolben und Arbeitszylinder einhergehende Verschleiß. Die dadurch erreichte verbesserte Tribologie wirkt sich außerdem vorteilhaft auf die Effizienz des Systems aus. Gemäß einer beispielhaften Weiterbildung können weitere Maßnahmen zur Verbesserung der tribologischen Eigenschaften des Pumpspeicherkraftwerks vorgesehen sein, wie weitere verschleiß- und/oder reibungsreduzierende Maßnahmen, wie eine Schmierung, spezifische Werkstoffwahl und/oder Beschichtungen. Zur auftriebskolbenseitigen und/oder arbeitszylinderseitigen Anordnung der Führungsrollen können auftriebskolbenseitig und/oder arbeitszylinderseitig entsprechende Nuten ausgeformt sein, in welchen die entsprechenden Führungsrollen angeordnet sind. Dabei hat sich als vorteilhaft erwiesen, bei einer Konfiguration mit arbeitszylinderseitigen Dichtungen die Führungsrollen ebenfalls arbeitszylinderseitig anzuordnen, und umgekehrt, um eine Kollision zwischen Dichtung und Führungsrollen zu vermeiden, was zu einer Beschädigung der wenigstens einen Dichtung und/oder der Führungsrollen führen kann. Die Erfinder der vorliegenden Erfindung haben herausgefunden, dass sich bei der Verwendung von Führungsrollen, insbesondere Rollenkränzen, ein vorzugsweise gleichmäßiger und/oder umlaufender Ringspalt zwischen Auftriebskolben und Arbeitszylinder ergibt, welcher die Aktivierung, vorzugsweise Steuerung, der wenigstens einen Dichtung erleichtert und/oder präzisiert. Gemäß einer beispielhaften Weiterbildung kann alternativ oder zusätzlich zu der wenigstens einen Dichtung ein Luftpolster vorgesehen sein, um das Unterfluidabteil gegen das Oberfluidabteil abzudichten. Das Luftpolster kann beispielsweise dadurch realisiert sein, dass ein vorzugsweise vorbestimmter Luftpolsterabschnitt eingeschlossen wird, in dem ein flüchtiges Medium unter Druck gesetzt wird. Leckagefluid zwischen Oberfluidabteil und Unterfluidabteil müsste, um in das Unterfluidabteil zu gelangen, zusätzlich zu der wenigstens einen Dichtung auch das unter Druck stehende flüchtige Medium, welches das Luftpolster bildet, überwinden bzw. umgehen. Insbesondere in Bezug auf Langlebigkeit des erfindungsgemäßen Pumpspeicherkraftwerks hat sich diese Maßnahme als vorteilhaft erwiesen.

In einer beispielhaften Ausführung der vorliegenden Erfindung sind eine Aktivierung der wenigstens einen Dichtung, vorzugsweise zum Festhalten und/oder Freigeben des Auftriebskolbens relativ zu dem Arbeitszylinder, und ein Verlagern des Auftriebskolbens zwischen der Energieladebetriebsstellung und der Energieabgabebetriebsstellung aufeinander abgestimmt. Beispielsweise kann vorgesehen sein, dass eine Relativbewegung des Auftriebskolbens relativ zu dem Arbeitszylinder vorzugsweise ausschließlich durch Aktivierung bzw. Deaktivierung, vorzugsweise Steuerung, der wenigstens einen Dichtung realisiert ist. Beispielsweise ist die Aktivierung der wenigstens einen Dichtung und das Verlagern des Auftriebskolbens derart aufeinander abgestimmt, dass eine Reibungskraft während des Verlagerns des Auftriebskolbens zwischen Auftriebskolben und Arbeitszylinder vorzugsweise kontinuierlich einstellbar ist, wobei insbesondere die wirkende Reibungskraft mit der infolge einer Aktivierung der Dichtung einhergehenden Ausdehnung/Zusammenziehung der wenigstens einen Dichtung korreliert.

In einer weiteren beispielhaften Ausführung des erfindungsgemäßen Pumpspeicherkraftwerks ist eine Aktivierungsenergiequelle, wie eine Pneumatik-, Elektronik- und/oder Hydraulikquelle, fluidal und/oder elektrisch mit der wenigstens einen Dichtung verbunden. Somit kann die wenigstens eine Quelle aktiviert bzw. deaktiviert werden, insbesondere mit Aktivierungsfluid beaufschlagt und/oder mit Strom versorgt werden. Gemäß einer beispielhaften Weiterbildung ist die Aktivierungsenergiequelle an eine Steuer- und/oder Regeleinrichtung zum vorzugsweise automatisierten Steuern und/oder Regeln der Aktivierungsenergiequelle, insbesondere zum Aktivieren bzw. Deaktivieren der wenigstens einen Dichtung, gekoppelt. Als Steuerung wird im Sinne der Anmeldung verstanden, dass das Verhalten der wenigstens einen Dichtung und damit des Pumpspeicherkraftwerks gezielt beeinflusst wird, insbesondere durch die Steuerung der Aktivierung bzw. Deaktivierung der wenigstens einen Dichtung, vorzugsweise um den Auftriebszylinder relativ zu dem Arbeitskolben festzuhalten bzw. freizugeben. Unter Regelung wird vorliegend verstanden, dass kontinuierlich oder getaktet eine Größe, nämlich die Regelgröße, wie beispielsweise ein Druck innerhalb der Dichtung, erfasst wird und mit einer Sollgröße, der Führungsgröße, wie beispielsweise ein vorbestimmter Solldruck, verglichen wird und anhand des Vergleichs aus Regelgröße und Führungsgröße eine Anpassung bzw. Beeinflussung der Regelgröße erfolgt. Beispielsweise kann die zum Aktivieren bzw. Deaktivieren der wenigstens einen Dichtung notwendige Energie durch Kopplung an ein vorzugsweise bezüglich des Pumpspeicherkraftwerks separates Stromnetz bereitgestellt werden. Des Weiteren ist es möglich, dass wenigstens ein Teil der zum Aktivieren bzw. Deaktivieren notwendigen Energie aus einem Teil der zu speichernden Energie abgezweigt wird. Beispielsweise kann ein Teil der einzuspeichernden Energie zwischengespeichert werden, z.B. in einem hydraulischen Speicher oder einem Druckluftspeicher, um diesen Teil der einzuspeichernden Energie für eine folgende Aktivierung bzw. Deaktivierung der wenigstens einen Dichtung zur Verfügung zu stellen. Beispielsweise wurde so herausgefunden, dass auf eine externe Stromversorgung verzichtet werden kann und sich das Pumpspeicherkraftwerk zum Aktivieren bzw. Deaktivieren der wenigstens einen Dichtung selbst versorgen kann, wodurch ein flexibler Einsatz des Pumpspeicherkraftwerks auch an Orten ohne erschlossene Stromversorgung ermöglicht ist.

Gemäß einer beispielhaften Weiterbildung der vorliegenden Erfindung dichtet wenigstens eine Vorspanndichtung den Auftriebskolben und den Arbeitszylinder an einem dem Unterfluidabteil abgewandten Ende des Auftriebskolbens gegeneinander ab. Dies bedeutet, dass die Vorspanndichtung an einem in Gravitationsrichtung betrachtet oberen Endabschnitt des Auftriebskolbens bzw. des Oberfluidabteils angeordnet sein kann. Es sei klar, dass die wenigstens eine Vorspanndichtung analog zu der wenigstens einen Dichtung aufgebaut und/oder an dem Pumpspeicherkraftwerk, insbesondere an einer Mantelinnenfläche des Arbeitszylinders und/oder einer Mantelaußenfläche des Auftriebskolbens, angeordnet sein kann. Die wenigstens eine Vorspanndichtung ist derart betreibbar, dass in der Energieladebetriebsstellung des Auftriebskolbens die wenigstens eine Vorspanndichtung zum Aufbau einer vorbestimmten Oberfluidsäule aktiviert ist, insbesondere derart aktiviert ist, dass die Gewichtskraft des Oberfluids die Auftriebskraft des Auftriebskolbens bezüglich des Arbeitsfluids beim Verlagern des Auftriebskolbens bis zu einer End-Energielagebetriebsstellung kontinuierlich übersteigt. Anders ausgedrückt dient die Vorspanndichtung dazu, im Energieladebetrieb des Pumpspeicherkraftwerks zunächst eine vorbestimmte Oberfluidsäule aufzubauen, ohne eine gravitationsbedingte Verlagerung des Auftriebskolbens in das Unterfluidabteil zuzulassen. Die Vorspanndichtung wird also zunächst solange aktiviert, bis sich eine vorbestimmte Oberfluidsäule in dem Oberfluidabteil oberhalb des Auftriebskolbens unter Festhalten des Auftriebskolbens bezüglich des Arbeitszylinders angehäuft hat. Während des Aufbauens der Oberfluidsäule nimmt die auf den Auftriebskolben entgegen dessen Auftriebsrichtung wirkende Gewichtskraft des Oberfluids, insbesondere der sich aufbauenden Oberfluidsäule, im Wesentlichen kontinuierlich zu. Sobald eine vorbestimmte Oberfluidsäule aufgebaut ist und/oder eine vorbestimmte Oberfluidsäulengewichtskraft bereitgestellt ist, wird die Vorspanndichtung angesteuert, insbesondere deaktiviert, um die zwischen Auftriebskolben und Arbeitszylinder wirkende Haltekraft zum Festhalten des Auftriebskolbens zu reduzieren, so dass der Auftriebskolben infolge der aufgebauten Oberfluidsäule, dessen Gewichtskraft die Auftriebskraft des Auftriebskolbens übersteigt, in Gravitationsrichtung bezüglich des Fluidspiegels in das Unterfluidabteil eingetaucht wird. Vorzugsweise wird der Auftriebskolben beim Deaktivieren der Vorspanndichtung schlagartig in eine Bewegung versetzt. Dadurch kann eine hohe Dynamik des Pumpspeicherkraftwerks erreicht werden. Dies wirkt sich auch vorteilhaft im Hinblick auf die zum Einbringen des Oberfluids in das Oberfluidabteil notwendige Energie aus, da lediglich die potentielle Energie, beispielsweise infolge einer Höhendifferenz zwischen Oberfluidabteil und Fluidreservoir, überwunden werden muss.

In einer beispielhaften Ausführung der vorliegenden Erfindung ist der Auftriebskolben und/oder der Arbeitszylinder an wenigstens einen außerhalb des Arbeitszylinders angeordneten und wenigstens teilweise in das Arbeitsfluidreservoir untergetauchten Zusatzkörper, beispielsweise ein Schwimmkörper, Tauchkörper, Ausgleichskörper und/oder Auftriebskörper, vorzugsweise in beliebiger Anzahl, Form und/oder Anbindungsart gekoppelt. Die Kopplung kann beispielsweise über eine Seilkonstruktion erfolgen, die einerseits an den wenigstens einen Zusatzkörper angebracht ist und andererseits an den Auftriebskolben angebracht ist. Die Seilkonstruktion kann beispielsweise über den Arbeitszylinder geführt, beispielsweise mittels Rollen, werden, so dass sich die zwischen Zusatzkörper und Auftriebskolben wirkenden Kräfte an dem Arbeitszylinder abstützen können. Insbesondere dient der wenigstens eine Zusatzkörper dazu, auf das Pumpspeicherkraftwerk wirkende Kräfte vor allem in der frei schwimmenden Konfiguration des Arbeitszylinders in dem Arbeitsfluidreservoir auszugleichen beziehungsweise aufzunehmen. Der Zusatzkörper kann dazu eingerichtet sein, eine entgegengesetzt der Gewichtskraft des Oberfluids gerichtete Kraftkomponente dem Auftriebskolben mitzuteilen, wobei insbesondere die Kraftkomponente einem Verlagern des Auftriebskolbens von der Energieabgabebetriebsstellung in die Energieladebetriebsstellung, das heißt von dem Oberfluidabteil bezüglich des Fluidspiegels nach unten in das Unterfluidabteil, entgegenwirkt. Das Vorsehen wenigstens eines Zusatzkörpers hat sich außerdem insbesondere dann als vorteilhaft erwiesen, wenn das Pumpspeicherkraftwerk derart gestaltet ist, dass die Auftriebskraft des Auftriebskolbens die der Auftriebskraft entgegengesetzt gerichtete Gewichtskraft des eingelassenen Oberfluids übersteigt. Bei dieser Konfiguration kann eine erhöhte Energiespeicherkapazität realisiert werden. Bei dieser Konfiguration muss zunächst mehr Energie aufgewendet werden, um den Auftriebskolben in das Unterfluidabteil einzutauchen, d.h. in die Energieladebetriebsstellung zu überführen, da der Auftriebsüberschuss durch Bereitstellung einer zusätzlichen Kraft, wie einer hydraulischen Druckkraft, überwunden werden muss. Gleichermaßen steht die zusätzlich aufgebrachte Energie in dem Energieabgabebetrieb des Pumpspeicherkraftwerks reversibel zur Verfügung, welche dann ebenfalls in elektrische Energie umgewandelt werden kann, so dass die in dem Energieabgabebetrieb bereitgestellte elektrische Energie erhöht werden kann. Gemäß einer beispielhaften Weiterbildung, bei der der Arbeitszylinder freischwimmend, das heißt ohne eine Verankerung in einem Boden des Fluidreservoirs, in dem Arbeitsfluidreservoir angeordnet ist, ist der Arbeitszylinder an wenigstens einen Schwimmkörper gekoppelt, der sich vorzugsweise außerhalb des Arbeitszylinders und wenigstens teilweise in das Arbeitsfluidreservoir untergetaucht befindet. Es hat sich herausgestellt, dass dies eine Stabilisierung des Pumpspeicherkraftwerks bei derartigen Konfigurationen unterstützt im Hinblick auf dessen schwimmende Anordnung in dem Arbeitsfluidreservoir. Dies bedeutet, dass die auf das Pumpspeicherkraftwerk infolge von Wechseln zwischen dem Energieladebetrieb und dem Energieabgabebetrieb wirkenden Kräfte besser ausgeglichen werden können.

Gemäß einer beispielhaften Ausführung der vorliegenden Erfindung umfasst das Pumpspeicherkraftwerk eine Pumpen-Turbinen-Einheit, auch Pumpturbine genannt, zum Aufbringen der zum Einnehmen des Energieladebetriebs erforderlichen Energie und zum Aufnehmen der im Energieabgabebetrieb abgegebenen Energie. Beispielsweise ist die Pumpen-Turbinen-Einheit außerhalb des Arbeitsfluidreservoirs und/oder oberhalb des Fluidspiegels angeordnet. Dadurch liegt beispielsweise an einem Turbinenausgang der Pumpen-Turbinen-Einheit kein hydrostatischer Widerstand, sondern nur Atmosphärendruck vor, so dass weniger Leistung verloren geht. Des Weiteren kennzeichnet sich die derartige Anordnung durch einen besseren Wartungszugang aus, sowie eine deutlich leichtere akustische Entkoppelung gegenüber dem Arbeitsfluidreservoir. Die Pumpen-Turbinen-Einheit kann dazu ausgelegt sein, in dem Energieladebetrieb Arbeitsfluid in das Oberfluidabteil, vorzugsweise aus dem Arbeitsfluidreservoir, in dem sich der Arbeitszylinder befindet, oder aus einem separaten Arbeitsfluidreservoir zu pumpen. Gemäß einer beispielhaften Weiterbildung kann das Pumpspeicherkraftwerk wenigstens einen Ausgleichskörper besitzen, der in dem Arbeitsfluidreservoir schwimmt und/oder teilweise in das Arbeitsfluidreservoir untergetaucht ist, wobei insbesondere der Ausgleichskörper dazu eingerichtet ist, die während des Betriebs der Pumpen-Turbinen-Einheit auftretenden Kräfte auf das Pumpspeicherkraftwerk abzustützen bzw. auszugleichen. Gemäß einer alternativen Ausführung, die mit der zuvor beschriebenen Ausführung kombinierbar ist, kann statt der Pumpen-Turbinen-Einheit eine separate Pumpe mit dem Pumpspeicherkraftwerk verbunden sein und das Pumpspeicherkraftwerk an eine weitere, separate Energieumwandlungseinrichtung gekoppelt sein, die im Energieabgabebetrieb die gespeicherte potentielle Energie zurück in elektrische Energie umwandelt. Beispielsweise können im Energieabgabebetrieb Behälter mit dem herausgedrückten oder abfließenden Oberfluid aus dem Oberfluidabteil befüllt werden und über eine Ketten-Riemen-Konstruktion an einen Generator gekoppelt werden, um die Gewichtskraft des herausgedrückten bzw. herauszufließenden Oberfluids in ein Drehmoment umzuwandeln, das der Generator zur Stromerzeugung verwenden kann. Beispielsweise kann die Pumpen-Turbinen-Einheit wenigstens einen Pumpspeicherzylinder besitzen. Des Weiteren ist es denkbar, dass mehrere Pumpspeicherzylinder von einer Pumpen-Turbinen-Einheit gespeist werden. Dabei kann vorgesehen sein, dass die Pumpspeicherzylinder parallel oder sequentiell gespeist werden. Durch die Reduzierung der Komponenten des erfindungsgemäßen Pumpspeicherkraftwerks können Kosten eingespart werden. Beispielsweise ist eine ringförmige Anordnung der mehreren Pumpspeicherzylinder bezüglich der einzigen Pumpen-Turbinen-Einheit möglich.

In einer weiteren beispielhaften Ausführung des erfindungsgemäßen Pumpspeicherkraftwerks ist die Pumpen-Turbinen-Einheit dazu eingerichtet, beim Einnehmen des Energieabgabebetriebs in einem Generatorbetrieb betreibbar zu sein. Dadurch kann in dem Energieabgabebetrieb Strömungsenergie des aus dem Oberfluidabteil herausgedrückten und/oder abfließenden Oberfluids in mechanische Energie umgewandelt werden, die vorzugsweise dazu benutzt werden kann, einen Stromgenerator anzutreiben. Wie bereits oben erwähnt wurde, können weitere Energieumwandlungseinrichtungen an das Pumpspeicherkraftwerk gekoppelt werden, um die gespeicherte potentielle Energie in elektrische Energie, insbesondere Strom, umzuwandeln. Beispielsweise kann die Pumpen-Turbinen-Einheit derart angeordnet sein, dass sich größtenteils eine im Wesentlichen vertikale Strömungsrichtung zwischen Arbeitsfluidreservoir und Arbeitszylinder und/oder zwischen Pumpe und Turbine ergibt. Des Weiteren ist es möglich, eine im Wesentlichen horizontale Strömungsrichtung vorzusehen. Bei dieser Anordnung hat sich als vorteilhaft erwiesen, dass keine Gravitationskräfte überwunden werden müssen, wobei sich allerdings ebenfalls herausgestellt hat, dass Strömungsverluste in Kauf genommen werden müssen.

Gemäß einer beispielhaften Ausführung der vorliegenden Erfindung ist der Arbeitszylinder, insbesondere das Oberfluidabteil, an einer dem Unterfluidabteil abgewandten Seite geschlossen oder wenigstens teilweise geöffnet. Beispielsweise kann der Arbeitszylinder mittels eines Deckels zur Umgebung hin insbesondere fluiddicht abgeschlossen werden. Beispielsweise kann der zur Umgebung hin abgeschlossene Arbeitszylinder, insbesondere der Deckel, dazu genutzt werden, das Einnehmen des Energieladebetriebs zu vereinfachen, da innerhalb des Arbeitszylinders, insbesondere innerhalb des Oberfluidabteils, ein hydraulischer Druck aufgebaut werden kann, der sich zwischen den Mantelflächen des Arbeitszylinders, dem Auftriebskolben und dem Abschluss, insbesondere Deckel, des Arbeitszylinders nach oben zur Umgebung realisiert wird. Des Weiteren liegt ein Vorteil darin, dass der Arbeitszylinder, insbesondere das Oberfluidabteil, fluiddicht bezüglich der Umgebung gestaltet ist, so dass beim Energieabgabebetrieb der Auftriebskolben neben der Auftriebskraft einer von dem herausströmenden bzw. abfließenden Oberfluid aus dem Oberfluidabteil bereitgestellten Sogkraft ausgesetzt ist, wodurch insbesondere zum einen die Effizienz des Pumpspeicherkraftwerks verbessert und die Dynamik, insbesondere die Reaktionsfähigkeit des Pumpspeicherkraftwerks, verbessert werden. Zum anderen wird ein sogenannter Stick-Slip-Effekt zwischen Auftriebskolben und Arbeitszylinder vermieden, der zu einem ungleichmäßigen Herausströmen bzw. Abfließen des Oberfluids aus dem Oberfluidabteil in den Energieabgabebetrieb führen kann. Des Weiteren kann der Deckel eine Tragfunktion übernehmen, beispielsweise zum Führen bzw. Abstützen der Seilkonstruktion zum Lagern der Zusatzkörper. Für den Fall, dass der Arbeitszylinder, insbesondere das Oberfluidteil, wenigstens teilweise, vorzugsweise vollständig, das heißt entsprechend einer Arbeitszylinderaußenabmessung, geöffnet ist, kann das Oberfluid beispielsweise aus Regenwasser gewonnen werden, welches über den nach oben, zur Umgebung hin offenen Arbeitszylinder in das Oberfluidabteil hineintropfen kann. Durch das Befüllen des Oberfluidabteils mit Regenwasser kann die Effizienz des Pumpspeicherkraftwerks erhöht werden, da keinerlei Energie aufgewendet werden muss, um das Oberfluidabteil zu befüllen.

In einer beispielhaften Ausführung des erfindungsgemäßen Pumpspeicherkraftwerks ist der Arbeitszylinder freischwimmend in dem Arbeitsfluidreservoir angeordnet oder fest in einem Grund des Arbeitsfluidreservoirs verankert. Dabei kann der Arbeitszylinder im Bereich des Unterfluidabteils derart gestaltet sein, dass ein Fluidaustausch mit dem Arbeitsfluidreservoir möglich ist. Beispielsweise ist das Unterfluidabteil zum Arbeitsfluidreservoir an einer dem Arbeitsfluidreservoir zugewandten Stirnseite vorzugsweise vollständig offen gestaltet. Des Weiteren kann das Unterfluidabteil eine Vielzahl von an den Mantelflächen des Unterfluidabteils eingebrachten Durchgangsöffnungen besitzen, über die ein Fluidaustausch zwischen Unterfluidabteil und Arbeitsfluidreservoir möglich ist.

Gemäß einer beispielhaften Weiterbildung der vorliegenden Erfindung ist eine Auftriebskraft des Auftriebskolbens bezüglich des in dem Arbeitsfluidreservoir angeordneten Arbeitsfluids größer als die Gewichtskraft des Oberfluids in einer End-Energieabgabebetriebsstellung des Auftriebskolbens zum Verbringen des Auftriebskolbens in die Energieladebetriebsstellung. Dabei kann das Material des Auftriebskolbens, insbesondere dessen Dichte, derart in Bezug auf das in dem Arbeitsfluidreservoir befindliche Arbeitsfluid eingestellt sein, dass der obige Zustand realisiert ist. Zusätzlich oder alternativ kann das Material des Auftriebskolbens, insbesondere dessen Dichte, derart in Bezug auf eine Oberfluidabteilgröße in der End-Energieabgabebetriebsstellung des Auftriebskolbens gewählt sein, dass der obige Zustand realisiert ist. Gemäß einer beispielhaften Weiterbildung ist die Pumpen-Turbinen-Einheit dazu eingerichtet, den Auftriebskraftüberschuss zu überwinden, insbesondere um den Auftriebskolben von der Energieabgabebetriebsstellung, insbesondere End-Energieabgabebetriebsstellung, in Richtung des Unterfluidabteils zu bewegen, insbesondere um die Energieladebetriebsstellung einzunehmen.

Gemäß einer beispielhaften Ausführung der vorliegenden Erfindung kann das Pumpspeicherkraftwerk ein Wasserschloss besitzen, insbesondere um strömungsbedingte Rückstöße in Leitungen insbesondere der Pumpen-Turbinen-Einheit, welche an den Arbeitszylinder angeschlossen sein können, zu vermeiden. Beispielsweise dient das Wasserschloss dazu, beim Unterbrechen des Energieabgabebetriebs eine sich ausbildende, fallende Oberfluidwassersäule aufzufangen. Dies kann erfindungsgemäß beispielsweise durch die folgenden zwei Maßnahmen initiiert werden. Zum einen kann wenigstens eine Dichtung derart aktiviert werden, dass der Auftriebskolben bezüglich des Arbeitszylinders festgehalten ist. Des Weiteren kann die Pumpen-Turbinen-Einheit derart angesteuert werden, dass das Hindurchfließen von Arbeitsfluid durch die Pumpen-Turbinen-Einheit unterbrochen ist. Beispielsweise ist an der Pumpen-Turbinen-Einheit eine Zuleitung zum Einfließenlassen von Oberfluid in das Oberfluidabteil vorgesehen und eine Ablaufleitung zum Abfließenlassen des herausgedrückten bzw. abfließenden Oberfluids aus dem Oberfluidabteils vorgesehen. Neben der Zulauf- und Ablaufleitung kann eine Ausgleichsleitung vorgesehen sein, in welche das sich in den Leitungen befindende Arbeitsfluid hineinfließen kann, um die oben beschriebenen Maßnahmen zu erreichen, insbesondere um kein Arbeitsfluid mehr durch die Turbinen-Pumpen-Einheit hindurchfließen zu lassen. Die im Falle des Unterbrechens des Energieabgabebetriebs entstehenden strömungsbedingten Druckstöße bzw. Druckspitzen können derart ausgeglichen werden, dass die Ausgleichsleitung mit dem Arbeitsfluid durchflutet wird und das Arbeitsfluid in eine Höhe entgegen der Gravitationsrichtung befördert wird, in der sich ein Gleichgewichtszustand einstellt. Sobald die Pumpen-Turbinen-Einheit wieder in Betrieb genommen wird, insbesondere der Energieabgabebetrieb des Pumpspeicherkraftwerks wieder eingenommen wird, ist vorgesehen, dass zunächst das Arbeitsfluid aus der Ausgleichsleitung der Pumpen-Turbinen-Einheit zugeführt wird, bevor diese erneut mit Arbeitsfluid aus der Zulauf- bzw. Ablaufleitung beaufschlagt wird. Beispielsweise kann die Ausgleichsleitung eine U-förmige Gestalt besitzen oder als Rohr-in-Rohr-Struktur gestaltet sein, bei der die Ausgleichsleitung die Zulauf- und Ablaufleitung umgibt.

Gemäß einem weiteren Aspekt der vorliegenden Erfindung, ist ein Pumpspeicherkraftwerk bereitgestellt. Ein Pumpspeicherkraftwerk ist am Allgemeinen ein Energiespeicher, der Energie in Form von potentieller Energie speichert, welche in Form von elektrischer Energie wieder zur Verfügung gestellt werden kann.

Insbesondere kann vorgesehen sein, die zu speichernde elektrische Energie dazu zu verwenden, ein hohes Energiepotential aufzubauen, wobei die elektrische Energie zunächst in kinetische Energie des verwendeten Arbeitsfluids und schließlich in potentielle Energie umgewandelt wird. Um bei Bedarf die gespeicherte Energie wieder nutzen zu können, wird der Vorgang umgekehrt durchgeführt, das heißt die gespeicherte potentielle Energie des Arbeitsfluids zunächst in kinetische Energie und schließlich in elektrische Energie umgewandelt. Das erfindungsgemäße Pumpspeicherkraftwerk kann als Onshore-Pumpenspeicherkraftwerk zur Verwendung bzw. Installation an Land oder als Offshore-Pumpenspeicherkraftwerk zur Verwendung bzw. Installation in einem Gewässer, wie einem Meer, ausgebildet sein.

Das Pumpspeicherkraftwerk umfasst einen Arbeitszylinder mit einem Arbeitsfluidabteil und einem Konterarbeitsabteil. Der Arbeitszylinder ist nicht auf eine bestimmte geometrische Form und/oder Dimensionierung beschränkt. Insbesondere im Hinblick auf auftretende hydrostatische Druckeinflüsse hat sich eine runde, vorzugsweise kreisrunde, Querschnittsform als vorteilhaft erwiesen. Im Hinblick auf die zu speichernde Energiemenge wurde bezüglich des Arbeitszylinders dessen Volumen als ausschlaggebender Einschlussfaktor identifiziert, das insbesondere von der Höhe des Arbeitszylinders und dessen Durchmesser abhängt. Insbesondere ist die Höhe des Arbeitszylinders entscheidend für die je Volumeneinheit zu speichernde potentielle Energiemenge, wobei die zu speichernde potentielle Energiemenge, die auch als Speicherkapazität bezeichnet werden kann, quadratisch mit einer Veränderung der Höhe des Arbeitszylinders skaliert. Des Weiteren skaliert das Arbeitszylinderinnenvolumen, also dessen Speicherkapazität, außerdem quadratisch mit dessen Radius. Folglich besteht ein Bestreben danach, möglichst große Arbeitszylinderabmessungen, insbesondere Arbeitszylinderhöhen und/oder Arbeitszylinderdurchmesser, vorzusehen.

Das Pumpspeicherkraftwerk umfasst außerdem einen Arbeitskolben, der gegenüber dem Arbeitszylinder in einer Arbeitsrichtung bewegbar ist und derart das Arbeitsfluidabteil von dem Konterarbeitsabteil abdichtet, dass Fluidaustausch, insbesondere gravitationsbedingter Fluidaustausch, zwischen Arbeitsfluidabteil und Konterarbeitsabteil verhindert ist. Bei dem Auftriebskolben handelt es sich beispielsweise um einen Hohlkörper, insbesondere einen Hohlzylinder, dessen Form und/oder Dimensionierung beispielsweise an eine Innenabmessung des Arbeitszylinders angepasst ist, insbesondere derart angepasst ist, dass dieser das Arbeitsfluidabteil von dem Konterarbeitsabteil fluiddicht trennt. Der Auftriebskolben kann beispielsweise aus einem Material hergestellt sein, das eine geringere Dichte als gegebenenfalls in dem Konterarbeitsabteil befindliches Konterarbeitsfluid und/oder als das zu speichernde Arbeitsfluid besitzt. Beispielsweise kommen Kunststoffe in Frage, die insbesondere aus sogenanntem Plastikmüll bestehen können.

In einem Energieladebetrieb, in dem Fluid in das Arbeitsfluidabteil eingelassen wird, so dass unter dem Einfluss des Fluiddrucks und der Gewichtskraft des eingelassenen Fluids, des in das Arbeitsfluid eingelassenen Arbeitsfluids der Arbeitskolben in das Konterarbeitsabteil unter Spannen des Arbeitskolbens, vorzugsweise unter Spannen einer Elastizitätskomponente am Arbeitskolben oder Eintauchen des Arbeitskolbens in ein in das Konterarbeitsabteil gefülltes Konterarbeitsfluid, bewegt wird. Die zu speichernde Energie wird demnach dazu verwendet, den Arbeitskolben zu spannen, das heißt die zu speichernde Energie wird dazu verwendet, Arbeit zu verrichten, um den Arbeitskolben zu spannen. Dabei kann der Arbeitskolben beispielsweise als Auftriebskolben gestaltet sein, analog zu der oben beschriebenen Ausführung der vorliegenden Erfindung, und bezüglich des in dem Konterarbeitsabteil angeordneten Konterarbeitsfluids eine Auftriebskraft besitzen, die einem Untertauchen des Auftriebskolbens in das Konterarbeitsfluid entgegengerichtet ist.

Das erfindungsgemäße Pumpspeicherkraftwerk umfasst außerdem einen Energieabgabebetrieb, in dem unter dem Einfluss der Spannkraft des gespannten Arbeitskolbens Arbeitsfluid aus dem Arbeitsfluidabteil herausgedrückt wird und/oder in dem eine während des Energieladebetriebs aufgebaute Fluidsäule des Arbeitsfluids vorzugsweise konstant aus dem Arbeitsfluidabteil abfließt. Dabei kann das herausgedrückte Arbeitsfluid eine Wassersäule festlegen, dessen Höhe eine Verlagerung des Arbeitskolbens in Arbeitsrichtung festgelegt. Der Energieabgabebetrieb kann außerdem derart gestaltet sein, dass die aufgebaute Arbeitsfluidsäule vorzugsweise konstant aus dem Arbeitsfluidabteil abgelassen wird bzw. abfließen kann, wobei vorgesehen sein kann, dass das bereits abgeflossene, aus dem Arbeitsfluidabteil sich entfernte Arbeitsfluid das restliche, noch in dem Arbeitsfluidabteil angeordnete Arbeitsfluid nachzieht, wobei insbesondere der bereits abgeflossene Arbeitsfluidanteil eine Sogwirkung bezüglich des noch in dem Arbeitsfluidabteil angeordneten Arbeitsfluids entfalten kann. Infolge des Abfließens des Arbeitsfluids aus dem Arbeitsfluidabteil reduziert sich eine auf den Arbeitskolben entgegen der Spannkraftrichtung wirkende Gewichtskraft des Arbeitsfluids, so dass die auf den Arbeitskolben wirkende Spannkraft kurzzeitig die Gewichtskraft des Arbeitsfluids übersteigt und somit der Arbeitskolben entgegen der Gravitationsrichtung und damit in Arbeitsrichtung verlagert wird.

Gemäß dem erfindungsgemäßen Pumpspeicherkraftwerk steht die gespeicherte potentielle Energie bei Bedarf im Wesentlichen vollständig zur erneuten Umwandlung in elektrische Energie zur Verfügung. Aufgrund der einfachen Konfiguration der vorliegenden Erfindung lässt sich das Pumpspeicherkraftwerk auf einfache Weise beliebig skalieren, so dass entsprechend des Anwendungsfalls beliebige Speicherkapazitäten auf einfache Weise realisiert werden können, vorzugsweise durch einfache Skalierung des Pumpspeicherkraftwerks. Des Weiteren hat sich die Aufteilung des Arbeitszylinders in Arbeitsfluidabteil und Konterarbeitsabteil im Hinblick auf dessen verringerten Bauraumbedarf im Bereich des Konterarbeitsabteils als vorteilhaft erwiesen. Außerdem wirkt sich die Ausnutzung der Auftriebskraft bzw. der Gewichtskraft gemäß der vorliegenden Erfindung vorteilhaft auf die Effizienz des Pumpspeicherkraftwerks aus, da insbesondere beim Einspeichern, also beim Einnehmen des Energieladebetriebs, wenig Energie aufzuwenden ist und/oder die zum Einspeichern verwendete Vorrichtung eine geringe Energieabgabeleistung besitzen muss.

In einer beispielhaften Weiterbildung der vorliegenden Erfindung erfolgt das Spannen des Arbeitskolbens unter dem Einfluss der Gewichtskraft des Arbeitsfluids. Es kann beispielsweise vorgesehen sein, dass in dem Energieladebetrieb eine vorzugsweise konstant zunehmende Arbeitsfluidsäule in dem Arbeitsfluidabteil aufgebaut wird. Des Weiteren kann vorgesehen sein, dass das Pumpspeicherkraftwerk derart angeordnet bzw. orientiert ist, dass eine Gravitationsrichtung in Richtung der Verlagerung des Arbeitskolbens, vorzugsweise entgegengesetzt der Verlagerung des Arbeitskolbens, orientiert ist. Gemäß einer beispielhaften Weiterbildung baut sich im Energieladebetrieb während des Einlassens von Arbeitsfluid in das Arbeitsfluidabteil eine Spannkraft, die vorzugsweise entgegengesetzt zur Gravitationsrichtung gerichtet ist, auf, die einer Verlagerung des Arbeitskolbens in das Konterarbeitsabteil entgegengesetzt orientiert ist. Gemäß einer beispielhaften Weiterbildung der vorliegenden Erfindung ist der Arbeitskolben dazu eingerichtet, sich beim Einlassen des Arbeitsfluids in das Arbeitsfluidabteil unter Vergrößerung des Arbeitsfluidabteils zu deformieren, insbesondere auszudehnen. Des Weiteren kann der Arbeitskolben dazu eingerichtet sein, sich beim Herausdrücken des Arbeitsfluids bzw. Abfließen des Arbeitsfluids aus dem Arbeitsfluidabteil unter Verkleinerung des Arbeitsfluidabteils zurück zu deformieren, insbesondere zu komprimieren. Beispielsweise kann der Arbeitskolben derart bewegbar in dem Arbeitszylinder angeordnet sein, dass ein Befestigungsteil des Arbeitszylinders, vorzugsweise ein dem Konterarbeitsabteil abgewandter Teil des Arbeitskolbens, an einer Mantelinnenfläche des Arbeitszylinders fest angebracht ist, und ein an den Befestigungsteil anschließender Deformationsteil des Arbeitskolbens, der sich vorzugsweise konterarbeitsabteilseitig befindet, in der Arbeitsrichtung relativ zu dem Arbeitszylinder verlagerbar, insbesondere deformierend verlagerbar, vorzugsweise expandierend und komprimierend verlagerbar, ist.

In einer beispielhaften Ausführung der vorliegenden Erfindung weist der Arbeitskolben wenigstens zwei teleskopartig bezüglich einander in Arbeitsrichtung verlagerbare Arbeitssegmente, wie den Befestigungsteil und den Deformationsteil, auf. Dabei können die wenigstens zwei Arbeitssegmente beim Einlassen des Arbeitsfluids in das Arbeitsfluidabteil auseinander ausfahren, wobei insbesondere sich eines der beiden Arbeitssegmente, insbesondere das konterarbeitsabteilseitige Arbeitssegment, vorzugsweise das Deformationsteil, in Richtung des Konterarbeitsabteils bewegt und/oder das dem Konterarbeitsabteil abgewandte Arbeitssegment, insbesondere der Befestigungsteil, während des Einlassens des Arbeitsfluids in das Arbeitsfluidabteil ortsfest verbleibt. Des Weiteren können die wenigstens zwei Arbeitssegmente beim Herausdrücken des Arbeitsfluids aus dem Arbeitsfluidabteil ineinander einfahren, wobei insbesondere das eine, vorzugsweise konterarbeitsabteilseitige, Arbeitssegment in Arbeitsrichtung in Richtung des Arbeitsfluidabteils bewegt wird und/oder das andere Arbeitssegment, vorzugsweise das dem Konterarbeitsabteil abgewandte Arbeitssegment, vorzugsweise der Befestigungsteil, ortsfest verbleibt. Gemäß einer beispielhaften Weiterbildung ist das Arbeitsfluidabteil im Wesentlichen von den wenigstens zwei Arbeitssegmenten begrenzt. Dies bedeutet, dass bei einer Ausdehnung bzw. Komprimierung und/oder beim Auseinanderaus- bzw. beim Ineinandereinfahren der wenigstens zwei Arbeitssegmente das Arbeitsfluidabteilvolumen eingestellt wird, bzw. variiert wird. Das teleskopartige Ineinanderein- bzw. Auseinanderausfahren der wenigstens zwei Arbeitssegmente kann durch wenigstens ein Federteil unterstützt werden, das die wenigstens zwei Arbeitssegmente miteinander verbindet und/oder die wenigstens zwei Arbeitssegmente in die ineinander eingefahrene Stellung vorspannt, welche beispielsweise die Energieabgabebetriebsstellung definiert.

In einer weiteren beispielhaften Ausführung des erfindungsgemäßen Pumpspeicherkraftwerks umfasst der Arbeitskolben einen im Wesentlichen das Arbeitsfluidabteil begrenzenden, elastisch deformierbaren Arbeitsbalg. Der Arbeitsbalg kann derart ausgestaltet sein, dass er sich beim Einlassen des Arbeitsfluids in das Arbeitsfluidabteil ausdehnt und beim Herausdrücken bzw. Abfließenlassen des Arbeitsfluids aus dem Arbeitsfluidabteil komprimiert. Beispielsweise kann vorgesehen sein, dass der Arbeitsbalg einen undeformierten Zustand besitzt, wenn sich das Pumpspeicherkraftwerk in der End-Energieabgabebetriebsstellung befindet, vorzugsweise wenn das eingespeicherte Arbeitsfluid im Wesentlichen vollständig aus dem Arbeitsfluidabteil herausgedrückt wurde bzw. aus diesem abfließen konnte. Zum Einnehmen des Energieladebetriebs ist demnach die von dem elastisch deformierbaren Arbeitsbalg beim Einlassen des Arbeitsfluids in das Arbeitsfluidabteil sich aufbauende Deformationsrückstellkraft zu überwinden. In dem Energieabgabebetrieb wird schließlich die aufgebaute Deformationsrückstellkraft dazu genutzt, das in dem Arbeitsfluidabteil befindliche Arbeitsfluid aus dem Arbeitsfluidabteil herauszudrücken.

In einer beispielhaften Weiterbildung des erfindungsgemäßen Pumpspeicherkraftwerks baut sich beim Spannen des Arbeitskolbens eine Spannkraft auf, die insbesondere in Arbeitsrichtung orientiert ist, vorzugsweise entgegen einer Verlagerungsrichtung des Arbeitskolbens, insbesondere einer Hauptdeformationsrichtung des Arbeitskolbens, wobei insbesondere die Spannkraft entgegen der Gravitationsrichtung orientiert ist, so dass die Spannkraft der Gewichtskraft des eingelassenen Arbeitsfluids entgegenwirkt. Des Weiteren kann vorgesehen sein, dass das Spannen des Arbeitskolbens durch eine Feder erfolgt. Insbesondere ist die Spannkraft, welche auf den Arbeitskolben wirkt, durch eine Feder aufgebracht. Gemäß einer beispielhaften Weiterbildung stützt sich die Feder an einer konterarbeitsabteilseitigen Stirnfläche des Arbeitskolbens und an einer das Konterarbeitsabteil vorzugsweise nach unten begrenzenden Bodenfläche des Arbeitszylinders ab. Es kann beispielsweise vorgesehen sein, dass sich die Feder derart abstützt, dass beim Einlassen des Arbeitsfluids in das Arbeitsfluidabteil die Feder in Richtung der Bodenfläche des Arbeitszylinders vorgespannt, insbesondere komprimiert wird und/oder sich beim Auslassen, vorzugsweise Herausdrücken, des Arbeitsfluids aus dem Arbeitsfluidabteil die Feder in Richtung der konterarbeitsabteilseitigen Stirnfläche des Arbeitskolbens vorzugsweise unter Bereitstellung einer Deformationsrückstellkraft, welche auf den Arbeitskolben wirkt, ausdehnt.

Gemäß einem weiteren Aspekt der vorliegenden Erfindung, ist ein Verfahren zum Betreiben eines Pumpspeicherkraftwerks bereitgestellt. Gemäß dem Verfahren wird zum Speichern von Energiearbeitsfluid in ein Oberfluidabteil eines in einem Arbeitsfluidreservoir teilweise eingetauchten Arbeitszylinders gefüllt. Dabei ist der Arbeitszylinder derart in dem Arbeitsfluidreservoir angeordnet, dass das Oberfluidabteil oberhalb eines Fluidspiegels des Arbeitsfluidreservoirs liegt und von einem Unterfluidabteil, das im Wesentlichen unterhalb des Fluidspiegels des Arbeitsfluidreservoirs liegt, durch einen Auftriebskolben fluidisch getrennt wird.

Ferner wird gemäß dem erfindungsgemäßen Verfahren zum Abgeben der Energie des Oberfluids unter Ausnutzung einer Auftriebskraft des Arbeitskolbens von diesem aus dem Oberfluidabteil herausgedrückt und/oder ein Abfließen des in dem Oberfluidabteil befindlichen Oberfluids aus konstanter Höhe ermöglicht.

Gemäß einem weiteren Aspekt der vorliegenden Erfindung, ist ein Verfahren zum Betreiben eines Pumpspeicherkraftwerks bereitgestellt. Bei dem Verfahren wird ein Arbeitszylinder in ein Arbeitsfluidabteil und ein Konterarbeitsabteil mittels eines Arbeitskolbens fluidisch unterteilt.

Des Weiteren wird zum Speichern von Energie Arbeitsfluid in das Arbeitsfluidabteil gefüllt bzw. eingelassen.

Gemäß dem erfindungsgemäßen Verfahren wird zum Abgeben von Energie das in das Arbeitsfluidabteil gefüllte bzw. eingelassene Arbeitsfluid unter Ausnutzung einer Auftriebskraft des Arbeitskolbens, wie einer Spannkraft einer Elastizitätskomponente am Arbeitskolben und/oder einer Auftriebskraft des in ein, in das Konterarbeitsabteil gefülltes Konterarbeitsfluid eingetauchten Arbeitskolbens, aus dem Arbeitsfluidabteil herausgedrückt und/oder aus konstanter Höhe abgeflossen.

Gemäß einer beispielhaften Weiterbildung des erfindungsgemäßen Verfahrens zum Betreiben eines Pumpspeicherkraftwerks kann das Verfahren dazu eingerichtet sein, das Pumpspeicherkraftwerk gemäß einem der zuvor beschriebenen Aspekten bzw. beispielhaften Ausführungen zu realisieren.

Gemäß einem weiteren Aspekt der vorliegenden Erfindung, der mit den zuvor beschriebenen Aspekten und beispielhaften Ausführungen kombinierbar ist, ist ein Pumpspeichersystem bereitgestellt. Das Pumpspeichersystem kann beispielsweise als Offshore-Pumpspeichersystem oder als Onshore-Pumpspeichersystem realisiert sein. Das erfindungsgemäße Pumpspeichersystem umfasst wenigstens zwei fluidal miteinander gekoppelte Pumpspeicherkraftwerke, die nach einem der zuvor beschriebenen Aspekte bzw. beispielhaften Ausführungen ausgestaltet sind. Gemäß einer beispielhaften Weiterbildung kann das Pumpspeichersystem, insbesondere können die Pumpspeicherkraftwerke, dazu eingerichtet sein, Energie aus erneuerbaren Ressourcen, wie Windkraft, Photovoltaik, Wasserkraft, zu verarbeiten, einzuspeichern und zur Umwandlung in elektrische Energie wieder abzugeben.

Bevorzugte Ausführungen sind in den Unteransprüchen gegeben.

Im Folgenden werden weitere Eigenschaften, Merkmale und Vorteile der Erfindung mittels Beschreibung bevorzugter Ausführungen der Erfindung anhand der beiliegenden beispielhaften Zeichnungen deutlich, in denen zeigen:
- Fig. 1: eine schematische Schnittansicht einer beispielhaften Ausführung eines erfindungsgemäßen Pumpspeicherkraftwerks;
- Fig. 2: eine Detailschnittansicht gemäß dem Ausschnitt II nach Fig. 1;
- Fig. 3: eine Detailschnittansicht gemäß dem Ausschnitt III nach Fig. 1;
- Fig. 4: eine weitere Schnittansicht des erfindungsgemäßen Pumpspeicherkraftwerks nach Fig. 1 in einer weiteren Betriebsstellung;
- Fig. 5: eine weitere Schnittansicht des erfindungsgemäßen Pumpspeicherkraftwerks nach Fig. 1 in einer weiteren Betriebsstellung;
- Fig. 6: eine weitere schematische Schnittansicht eines erfindungsgemäßen Pumpspeicherkraftwerks gemäß einer weiteren Ausführung;
- Fig. 7: eine weitere schematische Schnittansicht eines erfindungsgemäßen Pumpspeicherkraftwerks gemäß einer weiteren beispielhaften Ausführung;
- Fig. 8: eine weitere schematische Schnittansicht eines erfindungsgemäßen Pumpspeicherkraftwerks gemäß einer weiteren beispielhaften Ausführung;
- Fig. 9: eine weitere schematische Schnittansicht eines erfindungsgemäßen Pumpspeicherkraftwerks gemäß einer weiteren beispielhaften Ausführung;
- Fig. 10: eine weitere schematische Darstellung eines erfindungsgemäßen Pumpspeicherkraftwerks gemäß einer weiteren alternativen Ausführung;
- Fig. 11: eine weitere schematische Darstellung eines erfindungsgemäßen Pumpspeicherkraftwerks gemäß einer weiteren alternativen Ausführung;
- Fig.: 12 eine weitere schematische Darstellung eines erfindungsgemäßen Pumpspeicherkraftwerks gemäß einer weiteren alternativen Ausführung; und
- Fig. 13: eine weitere schematische Schnittansicht eines erfindungsgemäßen Pumpspeicherkraftwerks gemäß einer weiteren beispielhaften Ausführung.

In der folgenden Beschreibung beispielhafter Ausführungen eines erfindungsgemäßen Pumpspeicherkraftwerks ist ein erfindungsgemäßes Pumpspeicherkraftwerk im Allgemeinen mit der Bezugsziffer 1 versehen. Unter Bezugnahme auf die verschiedenen beispielhaften Ausführungen, die anhand der beiliegenden Figuren näher erläutert werden, wird zur Vermeidung von Wiederholungen bei der Beschreibung der einzelnen Ausführungsformen im Wesentlichen auf die zwischen den Ausführungsformen sich ergebenden Unterschiede eingegangen, wobei gleiche bzw. ähnliche Komponenten mit der gleichen bzw. ähnlichen Bezugsziffer versehen werden.

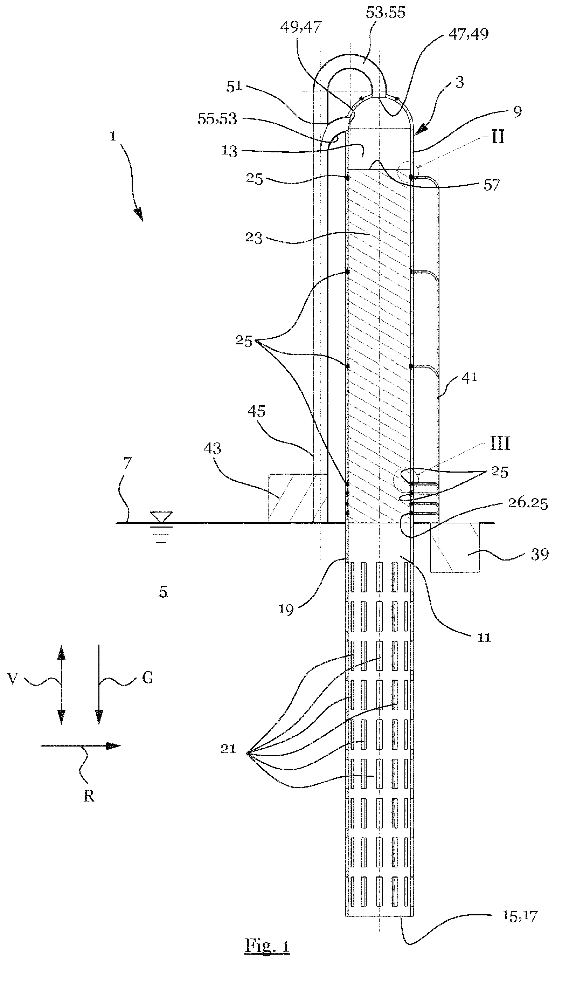

Das Pumpspeicherkraftwerk 1 umfasst einen Arbeitszylinder 3, der in ein Arbeitsfluidreservoir 5, das beispielsweise ein Wasserspeicher, ein Gewässer, wie ein See oder ein Meer, teilweise eingetaucht ist. Der Arbeitszylinder 3 umfasst ein im Wesentlichen oberhalb eines Fluidspiegels 7 des Arbeitsfluidreservoirs 5 angeordnetes Oberfluidabteil 9 und ein Unterfluidabteil 11 im Wesentlichen unterhalb des Fluidspiegels 7. Der Arbeitszylinder 3 ist gemäß der beispielhaften Ausführung als im Wesentlichen zylinderförmiges Bauteil mit konstanter Abmessung realisiert, der in seinem Inneren 13 einen Hohlraum definiert. Der Hohlraum 13 ist gegenüber der Umgebung im Bereich des Oberfluidabteils 9 abgeschlossen und im Bereich des Unterfluidabteils 11 gegenüber dem Arbeitsfluidreservoir 5 offen. Beispielsweise besitzt das Unterfluidabteil 11 an einer Stirnseite 15 eine zum Arbeitsfluidreservoir 5 hin offene Gestalt, beispielsweise in Form einer Durchgangsöffnung 17. Des Weiteren besitzt das Unterfluidabteil 11 an seiner Mantelfläche 19 eine Vielzahl von vorzugsweise gleichmäßig verteilten Durchgangsöffnungen 21, über die ein zusätzlicher Fluidaustausch mit dem Arbeitsfluidreservoir 5 und dem Inneren des Unterfluidabteils 11 ermöglicht ist. Gemäß der beispielhaften Ausführung in Fig. 1 ist das Pumpspeicherkraftwerk 1 im Wesentlichen in Gravitationsrichtung G orientiert, das heißt, dass der Arbeitszylinder 3 im Wesentlichen in Gravitationsrichtung G orientiert ist, die gemäß Fig. 1 nach unten weist. Anders ausgedrückt, erstreckt sich der Arbeitszylinder 3 im Wesentlichen entlang einer Längserstreckungsrichtung, die parallel zur Gravitationsrichtung G orientiert ist. Eine im Wesentlichen lotrecht zur Gravitationsrichtung G und damit zur Längserstreckungsrichtung orientierte Radialrichtung R definiert eine Radialabmessung des Arbeitszylinders 3. Wie in Fig. 1 dargestellt ist, sind die Durchgangsöffnungen 21 sowohl in Längserstreckungsrichtung als auch in Radialrichtung R im Wesentlichen gleichmäßig an der Mantelfläche 19 des Unterfluidabteils 11 verteilt, wobei klar ist, dass auch eine ungleichmäßige Verteilung in Längserstreckungsrichtung und/oder Radialrichtung R denkbar ist. Innerhalb des Arbeitszylinders 3 ist ein Auftriebskolben 23 angeordnet, der gegenüber dem Arbeitszylinder in einer Verlagerungsrichtung V, die parallel zur Gravitationsrichtung G orientiert ist, beweglich geführt. Der Auftriebskolben 23 ist derart in dem Arbeitszylinder 3 angeordnet und derart bezüglich des Arbeitszylinders 3 beweglich geführt, dass das Oberfluidabteil 9 von dem Unterfluidabteil 11 abgedichtet ist, und zwar derart, dass ein Fluidaustausch, wie gemäß Fig. 1 als gravitationsbedingte Fluidaustausch, zwischen Oberfluidabteil 9 und Unterfluidabteil 11 verhindert ist.

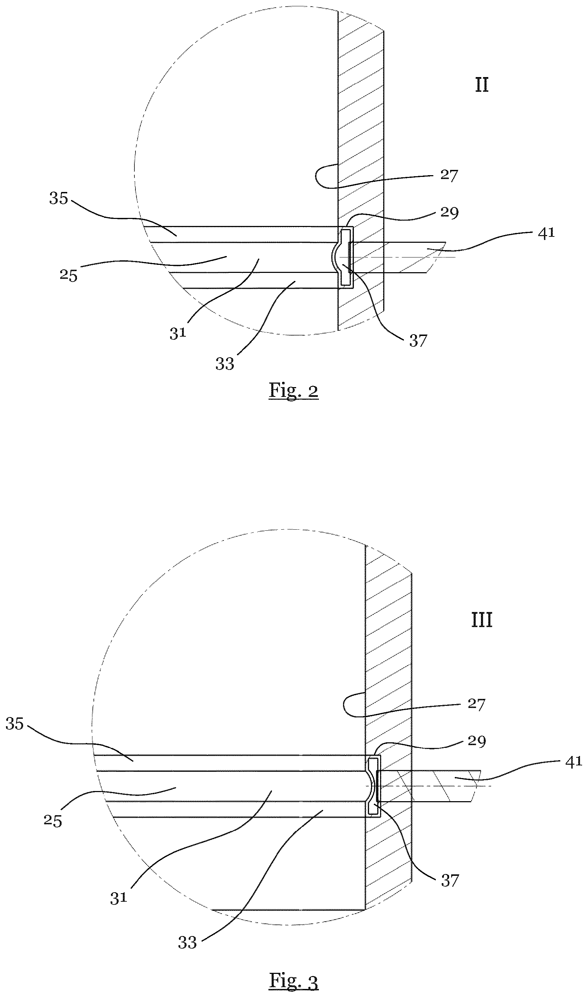

Zum Abdichten des Oberfluidabteils 9 gegenüber dem Unterfluidabteil 11 ist eine Gruppe von mehreren Dichtungen 25 zwischen Auftriebskolben 23 und Arbeitszylinder 3 angeordnet. Wie unter Bezugnahme auf die Fig. 2 und 3 zu sehen ist, sind die Dichtungen 25 in einer an einer Mantelinnenfläche 27 des Arbeitszylinders 3 ausgebildeten Nut 29 aufgenommen. Erneut bezugnehmend auf Fig. 1 ist zu erkennen, dass die Gruppe von mehreren Dichtungen 25, gemäß Fig. 1 sieben Umfangsdichtungen 25, entlang der Längserstreckung des Arbeitszylinders 3 verteilt sind, jedoch sämtlich im Bereich des Oberfluidabteils 9 angeordnet sind. Wenigstens eine der Dichtungen 25, vorzugsweise sämtliche der Dichtungen 25, sind derart aktivierbar, beispielsweise piezoelektrisch oder elektromagnetisch aktivierbar, und/oder hydraulisch und/oder pneumatisch beaufschlagbar, dass sich die wenigstens eine Dichtung 25 bei dessen Aktivierung in Richtung des Auftriebskolbens 23 ausdehnt (Fig. 2), um eine Haltekraft, wie eine Reibungskraft und/oder formschlussbedingte Kraft, zwischen Auftriebskolben 23 und Arbeitszylinder 3 vorzugsweise kontinuierlich aufzubauen, um den Auftriebskolben 23 relativ zu dem Arbeitszylinder 3 festzuhalten. In Fig. 1 ist schematisch das Pumpspeicherkraftwerk 1 in einer Energieabgabebetriebsstellung, insbesondere einer End-Energieabgabebetriebsstellung angeordnet, in welcher der Auftriebskolben 23 sich im Wesentlichen vollständig oberhalb des Arbeitsfluidreservoirs 5 befindet. Dies hängt damit zusammen, dass der Auftriebskolben 23 derart realisiert ist, dass dessen Auftriebskraft bezüglich des Arbeitsfluidreservoirs 5 größer bemessen ist als seine in Gravitationsrichtung G wirkende Gewichtskraft. Wie in Fig. 2 zu sehen ist, ist die obere Dichtung 25 aktiviert, was sich in einer insbesondere in Radialrichtung R wirkenden Ausdehnung darstellt, die in Fig. 2 anhand des konvexen Bauchs 31, der in zwei zu dem Bauch 31 benachbarte gerade Abschnitte 33, 35 mündet, ersichtlich ist. Um dies zu realisieren, ist die Dichtung 25 beispielsweise als Hohldichtung realisiert, welche einen Hohlraum 37 in ihrem Inneren definiert, der mittels einer in Fig. 1 schematisch dargestellten Aktivierungsenergiequelle 39 aktivierbar ist. Die Aktivierungsenergiequelle 39 kann beispielsweise eine Pneumatik- und/oder Hydraulikquelle sein und ist fluidal über ein Leitungssystem 41 mit wenigstens einer Dichtung 25 verbunden, um die wenigstens eine Dichtung 25 zu aktivieren bzw. zu deaktivieren, vorzugsweise hydraulisch und/oder pneumatisch zu beaufschlagen, um die Ausdehnung in Radialrichtung R zu veranlassen (Fig. 2) bzw. eine Komprimierung in Radialrichtung R zu bewirken (Fig. 3), welche dazu führt, dass die Haltekraft zwischen Auftriebskolben 23 und Arbeitszylinder 3 reduziert, vorzugsweise im Wesentlichen aufgehoben, wird.

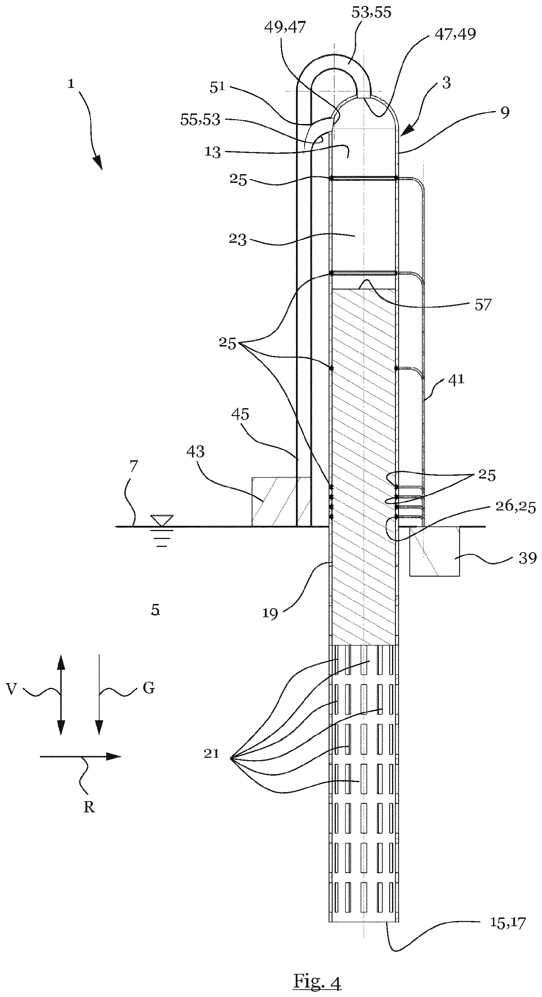

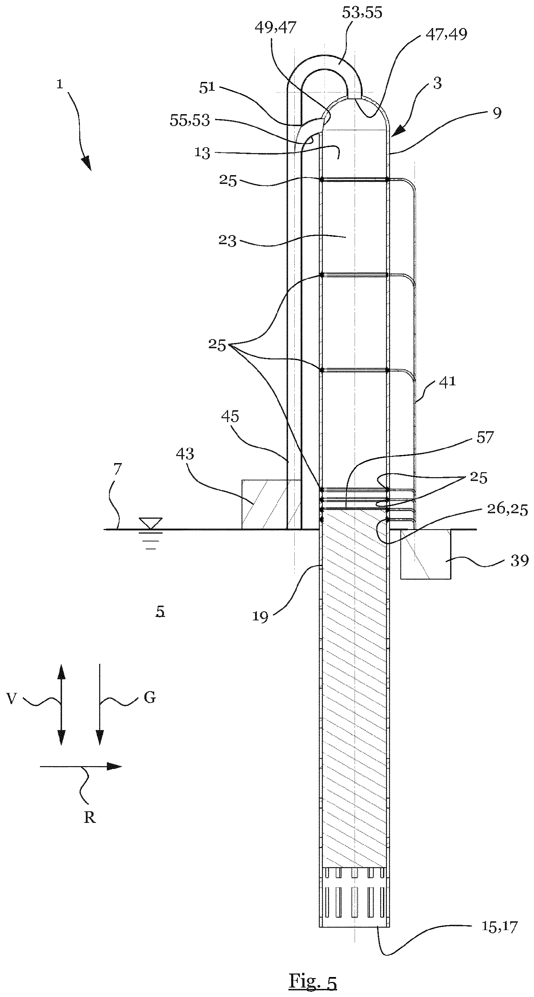

Unter Zusammenschau der Fig. 1, 4 und 5 wird die Funktionsweise des erfindungsgemäßen Pumpspeicherkraftwerks 1 anhand von drei beispielhaften Betriebsstellungen des Pumpspeicherkraftwerks 1 bzw. des Auftriebskolbens 23 in dem Arbeitszylinder 3 verdeutlicht. Wenn in der folgenden Beschreibung von einem Energieladebetrieb oder einer Energieladebetriebsstellung gesprochen wird, ist damit ein Betrieb bzw. ein Zustand gemeint, in dem Arbeitsfluid beispielsweise aus dem Arbeitsfluidreservoir 5 in das Oberfluidabteil 9, insbesondere in den Hohlraum 13, eingelassen wird, insbesondere mit dem Ziel, unter dem Einfluss der Gewichtskraft und/oder des hydrodynamischen Druckes des in das Oberfluidabteil 9 eingelassenen Oberfluids den Auftriebskolben 23 bezüglich des Fluidspiegels 7 in das Unterfluidabteil 11 einzutauchen (Abfolge der Fig. 1, 4 und 5). Mittels des Pumpspeicherkraftwerks 1 zu speichernde Energie wird wenigstens teilweise dazu verwendet, Arbeitsfluid in das Oberfluidabteil 9 einzulassen. Beispielsweise kann hierzu eine im Wesentlichen oberhalb des Fluidspiegels 7 und/oder außerhalb des Fluidreservoirs 5 angeordnete Pumpen-Turbinen-Einheit 43 mit dem Arbeitszylinder 3 gekoppelt sein, insbesondere fluidisch mit dem Oberfluidabteil 9 verbunden sein, um Arbeitsfluid beispielsweise aus dem Fluidreservoir 5 in das Oberfluidabteil 9 zu pumpen. Zu diesem Zweck besitzt die Pumpen-Turbinen-Einheit 43 ein Leitungssystem 45, welches in den Arbeitszylinder 3 mündet und beispielsweise eine Zulauföffnung 47 und eine Ablauföffnung 49 mündet. Wie in Fig. 1 ersichtlich ist, spaltet sich das Leitungssystem 45 an einer Weiche 51 in eine Zulaufleitung 53 und eine Ablaufleitung 55 auf, welche jeweils fluidisch mit dem Oberfluidabteil 9 verbunden sind. Ausgehend von dem in Fig. 1 dargestellten Betriebszustand, der beispielsweise ein Energieabgabebetriebszustand, insbesondere eine End-Energieabgabebetriebsstellung des Auftriebskolbens 23 innerhalb des Arbeitszylinders 3 festlegt, in den Energieladebetrieb (Fig. 4, 5) überzugehen, pumpt die Pumpen-Turbinen-Einheit 43 Arbeitsfluid über das Leitungssystem 45 in das Oberfluidabteil 9, wobei sich unter dem Einfluss der Gewichtskraft des Oberfluids in dem Oberfluidabteil 9 der Kolben 23 in Gravitationsrichtung G nach unten verlagert und kontinuierlich in das Arbeitsfluidreservoir 5 eintaucht. In Fig. 4 ist der Auftriebskolben 23 teilweise in das Unterfluidabteil 11 eingetaucht, wobei die in Fig. 4 dargestellte Betriebsstellung des Auftriebskolbens 23 ausgehend von Fig. 1 als Energieladebetriebsstellung und ausgehend von Fig. 5 als Energieabgabebetriebsstellung bezeichnet werden kann. Wenn in der folgenden Beschreibung von Energieabgabebetrieb bzw. Energieabgabebetriebszustand oder Energieabgabebetriebsstellung gesprochen wird, ist damit ein Zustand bzw. eine Stellung gemeint, in der/dem unter dem Einfluss der Auftriebskraft des Auftriebskolbens 23 bezüglich des Arbeitsfluids 5 Oberfluid aus dem Oberfluidabteil 9 herausgedrückt wird und/oder in dem eine während des Energieladebetriebs aufgebaute Fluidsäule (nicht dargestellt) des Oberfluids vorzugsweise konstant aus dem Oberfluidabteil 9 abfließt. Die aktivierbare wenigstens eine Dichtung 25 wird dazu verwendet, ein Verlagern des Auftriebskolbens 23 in Verlagerungsrichtung V zu gewährleisten bzw. zu unterbinden, wobei eine Aktivierung der wenigstens einen Dichtung 25, welcher Zustand in Fig. 2 dargestellt ist, dazu führt, dass die infolge der Ausdehnung der wenigstens einen Dichtung 25 in Richtung des Auftriebskolbens 23 resultierende Haltekraft bewirkt, dass der Auftriebskolben 23 relativ zu dem Arbeitszylinder 3 festgehalten wird, unabhängig davon, ob bereits Arbeitsfluid in das Oberfluidabteil 9 gepumpt wurde, oder nicht. Zum Freigeben, vorzugsweise vollständigen Freigeben, des Auftriebskolbens 23 und damit zum Ermöglichen einer Verlagerung des Auftriebskolbens 23 in Verlagerungsrichtung V, sowohl in Gravitationsrichtung G zum Einnehmen des Energieladebetriebs und entgegen der Gravitationsrichtung G zum Einnehmen des Energieabgabebetriebs, wird die wenigstens eine Dichtung 25 erneut angesteuert, insbesondere deaktiviert, welcher Zustand in Fig. 3 schematisch dargestellt ist.

Bezugnehmend auf Fig. 5 ist zu erkennen, dass der Auftriebskolben 23 im Wesentlichen fast vollständig in das Arbeitsfluidreservoir 5 eingetaucht ist und/oder sich im Wesentlichen vollständig innerhalb des Unterfluidabteils 11 befindet. Der End-Energieladebetriebszustand ist dann eingenommen, wenn der Auftriebskolben 23 im Wesentlichen vollständig in das Arbeitsfluidreservoir 5 untergetaucht ist, also eine oberfluidabteilseitige Stirnseite 57 des Auftriebskolbens 23 im Wesentlichen auf Höhe des Fluidspiegels 7 liegt. Dann ist eine maximale Speicherkapazität des erfindungsgemäßen Pumpspeicherkraftwerks 1 erreicht. Um von dem in Fig. 1 dargestellten Zustand, der beispielsweise ein End-Energieabgabebetriebszustand ist, in den in Fig. 5 dargestellten annähernd End-Energieladebetriebszustand zu überführen, wird gemäß der beispielhaften Ausführung der Fig. 1 bis 5 mittels der Pumpen-Turbinen-Einheit 43 Arbeitsfluid in das Oberfluidabteil 9 solange gepumpt, bis dieses im Wesentlichen vollständig mit Arbeitsfluid befüllt ist (Fig. 5), und die von dem Oberfluid auf den Auftriebskolben 23 wirkende Gewichtskraft den Auftriebskolben 23 dazu veranlasst hat, entgegen der Auftriebskraft des Auftriebskolbens 23 bezüglich des Arbeitsfluidreservoirs 5 nach unten in das Unterfluidabteil 11 einzutauchen. In diesem End-Energieladebetriebszustand kann beispielsweise vorgesehen sein, dass sich die Auftriebskraft des Auftriebskolbens 23 und die Gewichtskraft des Oberfluids, welches in dem Oberfluidabteil 9 eingelassen ist, sich im Wesentlichen die Waage halten, d.h. einen Gleichgewichtszustand einstellen, sodass keine weitere Verlagerung des Auftriebskolbens 23 in Verlagerungsrichtung V mehr einhergeht. Des Weiteren kann vorgesehen sein, dass die wenigstens eine Dichtung 25, gemäß Fig. 5 die unterste, nahe des Unterfluidabteils 11 angeordnete Dichtung 26 aktiviert ist, insbesondere hydraulisch und/oder pneumatisch beaufschlagt ist, um eine Halte-Reibungskraft zwischen Auftriebskolben 23 und Arbeitszylinder 3 zu generieren, welche einem Verlagern des Auftriebskolben 23 in Verlagerungsrichtung V entgegenwirken soll. Dadurch ist es möglich, den Energieladebetriebszustand des Pumpspeicherkraftwerks 1 einzuhalten und bei Bedarf in einen in den Energieabgabebetrieb zu überführen, wenn Bedarf an Energie besteht, und das Oberfluid aus dem Oberfluidabteil 9 wieder herausgedrückt bzw. abgelassen werden soll, um damit die Pumpen-Turbinen-Einheit 43 in einem Generatorbetrieb zu betreiben. In dem Generatorbetrieb ist die Pumpen-Turbinen-Einheit 43 dazu ausgelegt, die Strömungsenergie des aus dem Oberfluidabteil 9 herausgedrückten bzw. herausfließenden Oberfluids in mechanische Energie umzuwandeln, beispielsweise um einen Stromgenerator anzutreiben, der wiederum einem elektrischen Verbraucher zugeführt werden kann, um diesen mit Strom bzw. Energie zu versorgen. Das Abfließen des Oberfluids bzw. Herausdrücken des Oberfluids aus dem Oberfluidabteil 9 erfolgt dann über eine Ablaufleitung 55. In den Fig. 1 bis 5 ist eine Ausführung des Pumpspeicherkraftwerks 1 dargestellt, in welcher der Arbeitszylinder 3 freischwimmend in dem Arbeitsfluidreservoir 5 angeordnet ist. Weitere Ausführungen werden anhand später folgenden Figuren verdeutlicht.

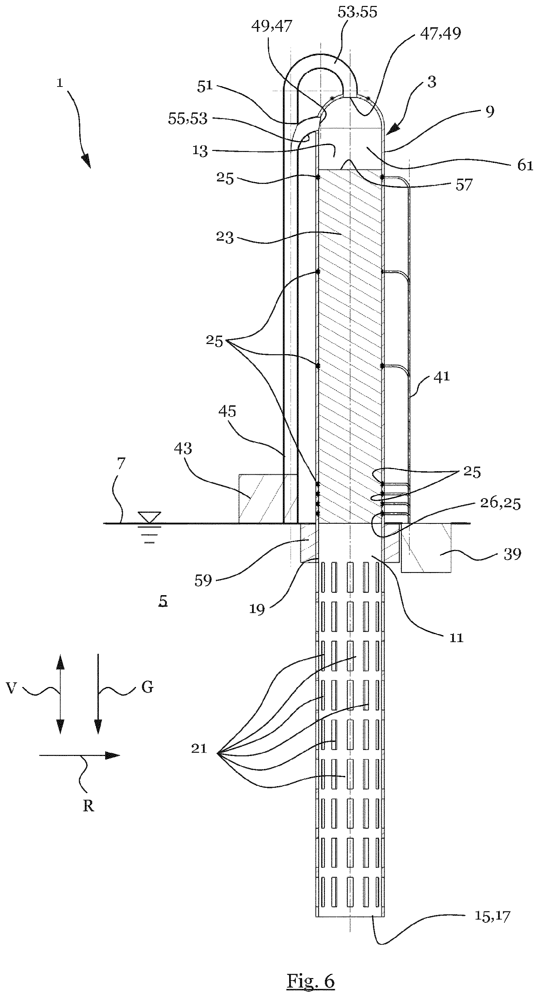

In Fig. 6 ist eine beispielhafte weitere Ausführungsform eines erfindungsgemäßen Pumpspeicherkraftwerks 1 schematisch dargestellt, bei dem an den Arbeitszylinder 3, insbesondere an das Unterfluidabteil 11, ein Zusatzkörper 59 angebracht ist. Bei dem Zusatzkörper 59 kann es sich beispielsweise um einen vollständig den Arbeitszylinder 3 umlaufenden Ringgewichtkörper handeln. Alternativ kann der Zusatzkörper 59 den Arbeitszylinder 3 nur teilweise umgeben und/oder aus mehreren teilkreissegmentartigen Zusatzkörpern 59 aufgebaut sein, die jeweils abschnittsweise den Arbeitszylinder 3 umgeben. Gemäß der Ausführung nach Fig. 6 ist der Zusatzkörper 59 im Wesentlichen vollständig in das Arbeitsfluidreservoir 5 untergetaucht und außerhalb des Arbeitszylinders 3 angeordnet. Beispielsweise kann vorgesehen sein, dass der Zusatzkörper 59 mittels einer (nicht dargestellten) Seilkonstruktion an den Auftriebskolben 23 gekoppelt ist. Insbesondere dient der wenigstens eine Zusatzkörper 59 dazu, auf das Pumpspeicherkraftwerk 1 wirkende Kräfte vor allem in der frei schwimmenden Konfiguration des Arbeitszylinders 3 in dem Arbeitsfluidreservoir 5 auszugleichen beziehungsweise aufzunehmen. Der Zusatzkörper 59 kann beispielsweise auch dazu dienen, eine entgegengesetzte Gewichtskraft des Oberfluids gerichtete Kraftkomponente dem Auftriebskolben 23 mitzuteilen, um einem Verlagern des Auftriebskolbens 23 von der in Fig. 6 dargestellten End-Energieabgabebetriebsstellung in eine Energieladebetriebsstellung entgegenzuwirken. Diese Konfiguration hat sich insbesondere dann als vorteilhaft erwiesen, wenn der Auftriebskolben 23 bzw. dessen Material derart ausgewählt ist, dass eine Auftriebskraft des Arbeitskolbens 23 bezüglich des Arbeitsfluidreservoirs 5 größer als die Gewichtskraft des Oberfluids in der End-Energieabgabebetriebsstellung des Auftriebskolbens 23 ist. Dies bedeutet, dass selbst bei vollständig befülltem Oberfluidabteil 9, das heißt vollständig befülltem freien Oberfluidabteilbereich 61, der in Fig. 6 von der Stirnfläche 57 des Auftriebskolbens 23 und dem Oberfluidabteil 9 begrenzt ist, wirkende Gewichtskraft kleiner bemessen ist als die Auftriebskraft des Auftriebskolbens 23 bezüglich des Fluidreservoirs 5. Die Pumpen-Turbinen-Einheit 43, welche in Bezug auf Fig. 1 bis 5 erläutert wurde, kann dazu eingerichtet, den Auftriebskraftüberschuss zu überwinden, beispielsweise durch Bereitstellen eines hydrodynamischen Druckes mittels einer Strömung des Arbeitsfluids, welche auf die Stirnfläche 57 des Auftriebskolbens 23 wirkt und somit eine Kraftkomponente in Gravitationsrichtung G und damit entgegen der Auftriebskraftrichtung erzeugt.

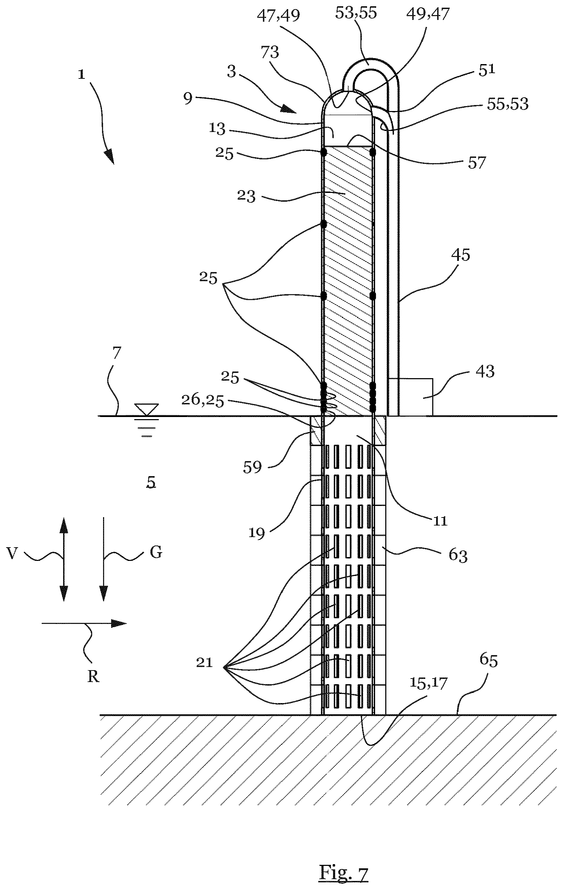

Die Ausführung gemäß der Fig. 7 unterscheidet sich von der Ausführung gemäß Fig. 6 im Wesentlichen dadurch, dass eine Verankerung 63 zum Verankern des Arbeitszylinders 3 an einem Grund 65 des Arbeitsfluidreservoirs 5 vorgesehen ist. Die Verankerung 63 kann beispielsweise eine gitter- bzw. käfigartige Struktur beispielsweise aus Metall besitzen und/oder den Arbeitszylinder 3, insbesondere das Unterfluidabteil 11, im Wesentlichen vollständig umgeben. Beispielsweise ist die Verankerung 63 ausschließlich unterhalb des Fluidspiegels 7 in dem Arbeitsfluidreservoir 5 angeordnet. Eine Verankerung, wie die Käfigstruktur-Verankerung 63 gemäß Fig. 7, hat den Vorteil, dass auf das Pumpspeicherkraftwerk 1 wirkende Kräfte von der Verankerung 63 aufgenommen werden können, was sich positiv auf die Stabilität des Pumpspeicherkraftwerks 1 auswirkt.

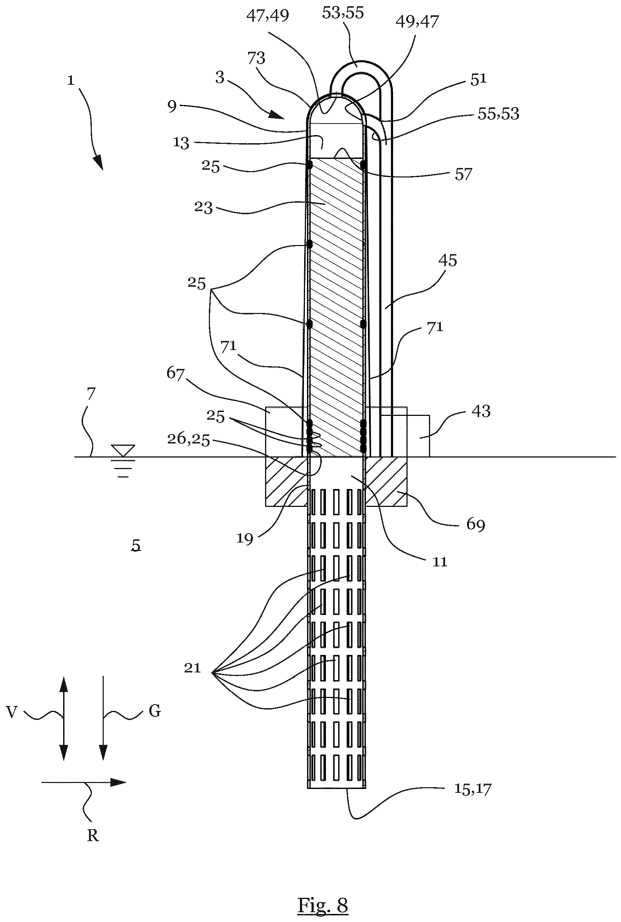

Im Unterschied zu Fig. 7, bei der der Arbeitszylinder 3 auf dem Grund 65 des Arbeitsfluidreservoirs 5 verankert ist, ist der Arbeitszylinder 3 gemäß Fig. 8 freischwimmend in dem Arbeitsfluidreservoir 5 angeordnet. Um die auf das Pumpspeicherkraftwerk 1 wirkenden Kräfte im Betrieb des Pumpspeicherkraftwerks 1 aufnehmen bzw. ausgleichen zu können, ist eine Anordnung von Ausgleichskörpern 67 und Schwimm- bzw. Tauchkörpern 69 vorgesehen. Sowohl die im Wesentlichen außerhalb des Fluidreservoirs angeordneten Ausgleichskörper 67 als auch die im Wesentlichen unterhalb des Fluidspiegels 7 in dem Arbeitsfluidreservoir 5 eingetauchten Schwimm- bzw. Tauchkörper 69, die gemäß Fig. 8 als Tauchkörper ausgebildet sind, sind nahe des Fluidspiegels 7 außerhalb des Arbeitszylinders 3 angeordnet. Die im Wesentlichen oberhalb des Fluidspiegels 7 angeordneten Ausgleichskörper, welche beispielsweise hohl ausgestaltet sein können und eine Dichte aufweisen, die geringer als die Dichte des in dem Arbeitsfluidreservoir 5 befindlichen Arbeitsfluids ist, können bei auf das Pumpspeicherkraftwerk 1 wirkenden Kräften in das Arbeitsfluidreservoir 5 untergetaucht werden und dabei infolge ihrer geringeren Dichte eine Gegenkraft erzeugen, die die Ausgleichskörper 67 wieder dazu veranlassen, aus dem Arbeitsfluidreservoir aufzutauchen. Beispielsweise ist vorgesehen, dass die Ausgleichskörper 67 fest mit dem Arbeitszylinder 3 verbunden sind, so dass die beim Untertauchen der Ausgleichskörper 67 auftretende Gegenkraft dem Arbeitszylinder 3 mitgeteilt wird, um das Pumpspeicherkraftwerk 1 wieder in seiner nicht verlagerten Initial-Betriebsstellung zu stabilisieren. Im Wesentlichen vollständig in das Arbeitsfluidreservoir 5 untergetaucht, sind Tauchkörper 69, deren Dichte beispielsweise in etwa der Dichte des in dem Arbeitsfluidreservoir 5 befindlichen Arbeitsfluids entspricht, so dass die Tauchkörper 69 sich im Wesentlichen neutral verhalten, das heißt zunächst keine Kraftkomponente dem Pumpspeicherkraftwerk 1 mitteilen. Sobald infolge von Krafteinflüssen auf das Pumpspeicherkraftwerk 1 sich dieses im Vergleich zu der in Fig. 8 dargestellten Lage wenigstens teilweise anhebt, das heißt entgegen der Gravitationsrichtung G aus dem Fluidreservoir 5 auftaucht, wirken die Tauchkörper 69 als gewichtserhöhend für das Pumpspeicherkraftwerk 1. Damit stellen die Tauchkörper 69 eine entgegen der die Gewichtkraft verursachende zusätzliche Gewichtskraft bereit, die dazu genutzt werden kann, das Pumpspeicherkraftwerk 1 zurückzubewegen, insbesondere um das Pumpspeicherkraftwerk 1 in seiner Lage bezüglich des Fluidspiegels 5, das heißt seiner Lage in Gravitationsrichtung G, zu stabilisieren. Dabei kann vorgesehen sein, dass die Ausgleichskörper 67 und/oder die Schwimm- bzw. Tauchkörper 69 mittels einer schematisch mit der Bezugsziffer 71 angedeuteten Seilkonstruktion an dem Arbeitszylinder 3 befestigt sind. Insbesondere stützt sich die Seilkonstruktion 71 an einem oberseitigen Endbereich, vorzugsweise Deckelbereich 73 des Oberfluidabteils 9 ab. Die Gestalt und/oder die Abmessung der Ausgleichskörper 67 bzw. der Schwimm- bzw. Tauchkörper 69 ist, ähnlich wie der Zusatzkörper 59, nicht auf einer bestimmten Gestalt und/oder Abmessung beschränkt. Diese können beispielsweise ringförmig gestaltet sein und/oder den Arbeitszylinder 3 teilweise oder gar vollständig umgeben und/oder aus Teilsegmenten, insbesondere teilkreisförmigen, den Arbeitszylinder 3 teilkreisartig umgebenden Ringformstrukturen aufgebaut sein. In Bezug auf die Fig. 7, 8 und 9 sei angemerkt, dass aus Gründen der Übersichtlichkeit das Leitungssystem 41 und die damit verbundene Aktivierungsenergiequelle 39 weggelassen ist, wenngleich Aktivierungsenergiequelle 39 und Leitungssystem 41 gemäß der Ausführung nach Fig. 7 und 8 vorgesehen sein können.

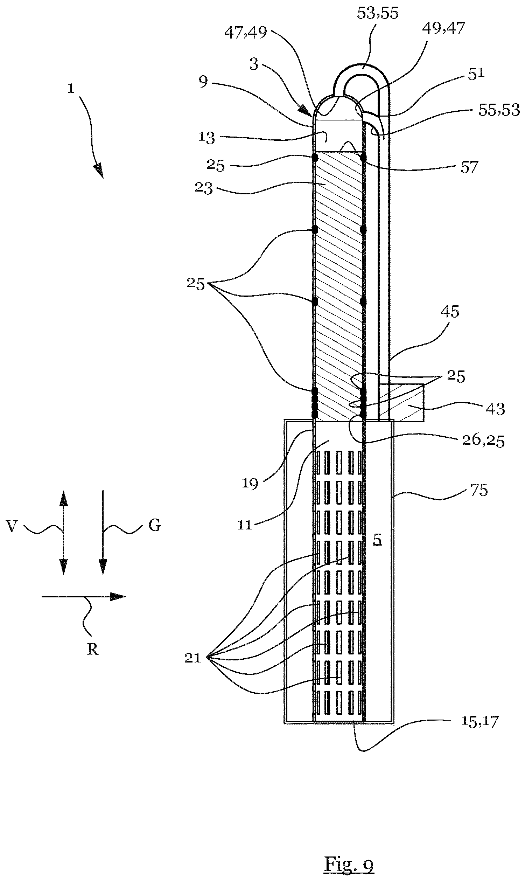

In Fig. 9 ist eine weitere beispielhafte Ausführung eines erfindungsgemäßen Pumpspeicherkraftwerks 1 dargestellt, die sich von den zuvor beschriebenen Ausführungsformen im Wesentlichen dadurch unterscheidet, dass das Arbeitsfluidreservoir 5 als Becken, Tonne, Kanister, oder dergleichen 75 realisiert ist. Beispielsweise eine im Freien aufgestellte Regentonne 75 hat sich als zweckmäßig erwiesen. Die Pumpen-Turbinen-Einheit 43 kann das in das Oberfluidabteil 9 einzulassende Arbeitsfluid beispielsweise aus dem Becken 75 beziehen oder an eine separate (nicht dargestellte) Arbeitsfluidreservoirquelle angeschlossen sein. Des Weiteren kann, alternativ zu der in Fig. 9 nach oben hin zur Umgebung geschlossenen Ausführung, im Bereich des Deckels 73 wenigstens eine Öffnung zur Umgebung hin nach oben bereitgestellt sein, über die beispielsweise Regenwasser in das Oberfluidabteil 9 einfließen kann und welches dazu genutzt werden kann, den Auftriebskolben 23 nach unten in das in dem Becken 75 angeordnete Unterfluidabteil 11 zu verlagern, um das Pumpspeicherkraftwerk 1 in den Energieladebetriebe zu verbringen. Das mittels des Beckens 75 begrenzte Arbeitsfluidreservoir 5 gemäß Fig. 9 kann als geschlossenes Arbeitsfluidreservoir bezeichnet werden, während die gemäß der Fig. 1 bis 8 dargestellten Arbeitsfluidreservoire 5 als offene Arbeitsfluidreservoire, wie offene Gewässer, realisiert sein können.

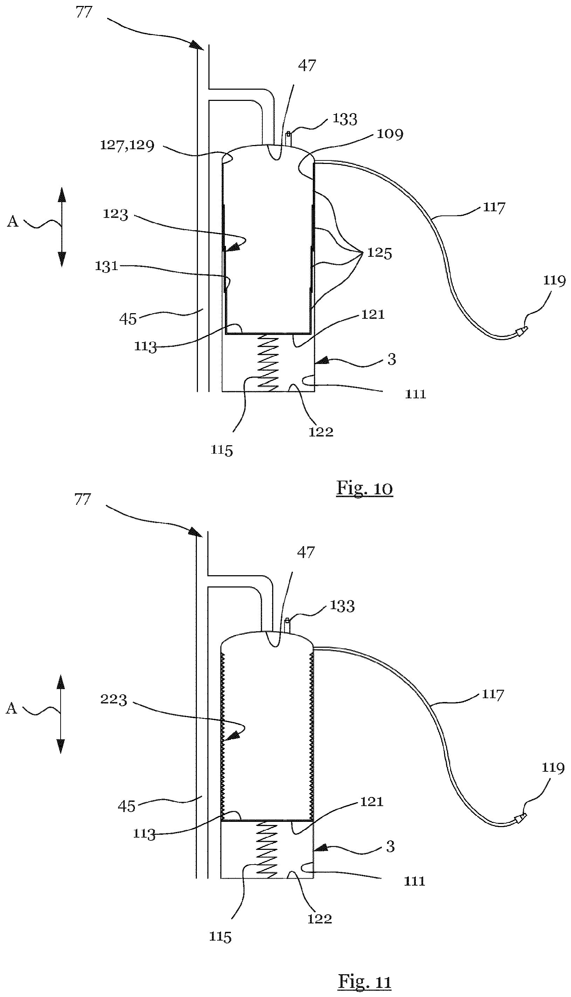

In Bezug auf die Fig. 10 und 11 werden zwei weitere erfindungsgemäße Pumpspeicherkraftwerke 1 gemäß einem weiteren Aspekt der vorliegenden Erfindung beschrieben. Das Pumpspeicherkraftwerk 1 umfasst einen im Wesentlichen kreiszylindrischen Arbeitszylinder 3 mit einem Arbeitsfluidabteil 109 und einem von dem Arbeitsfluidabteil 109 fluidisch getrennten Konterarbeitsabteil 111. Gemäß den Fig. 10 und 11 ist das Pumpspeicherkraftwerk 1 im Wesentlichen in Gravitationsrichtung G orientiert, so dass das Arbeitsfluidabteil 109 in den schematischen Darstellungen oberhalb des Konterarbeitsabteils 111 angeordnet ist. Das Arbeitsfluidabteil 109 wird von dem Konterarbeitsabteil 111 von einem Arbeitskolben ₁₂₃ getrennt und fluidisch gegeneinander abgedichtet, sodass Fluidaustausch zwischen Arbeitsfluidabteil 109 und Konterarbeitsabteil 111 verhindert ist. Der Arbeitskolben 123 ist gegenüber dem Arbeitszylinder 3 in einer Arbeitsrichtung A bewegbar, die gemäß Fig. 10 und 11 entlang der Gravitationsrichtung G orientiert ist, jedoch allgemein im Wesentlichen in Längserstreckungsrichtung des Arbeitszylinders 3 liegt. Bei einer Bewegung des Arbeitskolbens 123 relativ zu dem Arbeitszylinder 3 führt der Arbeitskolben 123 vereinfacht ausgedrückt eine Bewegung zwischen bzw. in Richtung Arbeitsfluidabteil 109 und Konterarbeitsabteil 111 aus. In einem Energieladebetrieb des Pumpspeicherkraftwerks 1 wird Fluid in das Arbeitsfluidabteil 109 eingelassen. Dies kann beispielsweise über eine in Bezug auf die Fig. 1 bis 9 erörterte Pumpen-Turbinen-Einheit 43 geschehen, oder wie es in Fig. 10 schematisch dargestellt ist, lediglich über eine Pumpe (nicht dargestellt), welche an ein Leitungssystem 45 angeschlossen ist, das an einem Leitungseingang 47 in das Oberfluidabteil 109 mündet. Ähnlich wie in den zuvor beschriebenen Ausführungen bewirkt das in das Arbeitsfluidabteil 109 eingelassene Arbeitsfluid eine Kraft auf den Arbeitskolben 123. Die Kraft kann beispielweise im Wesentlichen die Gewichtskraft des sich in dem Arbeitsfluidabteil 109 befindlichen Arbeitsfluids sein. Des Weiteren kann die Kraft wenigstens teilweise aus einer hydrodynamischen Druckkraft bestehen, die sich infolge des Einlassens der Strömung des Arbeitsfluids in das Arbeitsfluidabteil 109 ausbildet und auf eine arbeitsfluidabteilseitige Stirnfläche 113 drückt, um den Arbeitskolben 123 in Richtung des Konterarbeitsabteils 111, das heißt im Wesentlich in das Konterarbeitsabteil 111, unter Spannen des Arbeitskolbens 123 zu bewegen. Das Spannen des Arbeitskolbens 123 kann beispielsweise unter Spannen einer Elastizitätskomponente 115 erfolgen oder alternativ durch Eintauchen des Arbeitskolbens 123 in ein in das Konterarbeitsabteil 111 gefülltes Konterarbeitsfluid, wobei bei letzterer Variante der Arbeitskolben 123 bzw. dessen Material derart gewählt sein sollte, dass sich eine Auftriebskraft des Arbeitskolbens 123 bezüglich des in das Konterarbeitsabteil 111 eingelassenen Konterarbeitsfluids einstellt. Durch Spannen der Elastizitätskomponente 115 baut diese eine Deformationsrückstellkraft entgegen der Bewegung des Arbeitskolbens 123 auf, welche im Wesentlichen die potentielle Energie begründet, die durch das Pumpspeicherkraftwerk 1 gespeichert wird und in einem Energieabgabebetrieb, der im Folgenden beschrieben wird, wieder zur Verfügung gestellt werden kann. In dem Energieabgabebetrieb wird unter dem Einfluss der Spannkraft des gespannten Arbeitskolbens 123 Arbeitsfluid aus dem Arbeitsfluidabteil herausgedrückt. Dabei kann der Arbeitszylinder 3, wie es in Bezug auf die Fig. 1 bis 9 beschrieben wurde, mittels des Leitungssystems 45 an die Pumpen-Turbinen-Einheit 43 gekoppelt sein, welche in einem Generatorbetrieb zum Betreiben eines Stromgenerators, welcher mechanische Energie in elektrische Energie umwandelt, betreibbar ist. Gemäß den Fig. 10 und 11, in denen statt der Pumpen-Turbinen-Einheit 43 eine nicht dargestellte Pumpe zum Einpumpen von Arbeitsfluid in das Arbeitsfluidabteil 109 vorgesehen ist, wird das Arbeitsfluid in dem Energieabgabebetrieb über eine Leitung 117 an einen Energiewandler übergeben, der aus der Strömungsenergie des ausströmenden Arbeitsfluids elektrische Energie erzeugen kann. Beispielsweise besitzt die Leitung an einem Ende einen Anschlussstutzen bzw. eine Düse 119 zum Verbinden mit dem Energiewandler. Dieser kann beispielsweise durch Befüllen wenigstens eines Behälters realisiert werden, der mittels einer Ketten-Riemen-Konstruktion (nicht dargestellt) die Gewichtskraft des ausfließenden Arbeitsfluids in ein Moment umwandelt, welches von einem Stromgenerator in elektrische Energie umgewandelt werden kann.

Sowohl in Fig. 11 als auch in Fig. 10 erfolgt das Spannen des Arbeitskolbens 123 durch eine als Feder ausgebildete Elastizitätskomponente 115. Die Feder 115 stützt sich an einer konterarbeitsteilseitigen Stirnfläche 121 sowie an einer den Konterarbeitsabteil 111 nach unten hin begrenzenden Bodenfläche 122 des Arbeitszylinders 3 ab. Und zwar derart, dass beim Einlassen des Arbeitsfluids in das Arbeitsfluidabteil 109 die Feder 115 in Richtung der Bodenfläche 122 des Arbeitszylinders 3 vorgespannt wird, so dass sich eine Deformationsrückstellkraft entgegen der Verlagerung des Arbeitskolbens 123 in Arbeitsrichtung A aufbaut. Das Einlassen des Arbeitsfluids in das Arbeitsfluidabteil 109 und das damit einhergehende Spannen der Feder bzw. der Elastizitätskomponente 115 erfolgt unter Vergrößerung des Arbeitsfluidabteils 109, das heißt unter Ausdehnung bzw. Erweiterung des Arbeitsfluidabteils 109 in Richtung des Konterarbeitsabteils 111. Beim Herausdrücken des Arbeitsfluids aus dem Arbeitsfluidabteil 109, das heißt während des Energieabgabebetriebs, stellt sich der umgekehrte Fall ein.

Gemäß Fig. 10 besitzt der Arbeitskolben 123 wenigstens zwei, bzw. wie es in Fig. 10 dargestellt ist, vier, teleskopartig bezüglich einander in Arbeitsrichtung A verlagerbare Arbeitssegmente 125. Die Arbeitssegmente 125 sind dabei derart bezüglich einander angeordnet und aufeinander abgestimmt, dass beim Einlassen des Arbeitsfluids in das Arbeitsfluidabteil 109 die Arbeitssegmente 125 auseinander ausfahren, welcher Zustand teilweise in Fig. 10 dargestellt ist. Beim Herausdrücken des Arbeitsfluids aus dem Arbeitsfluidabteil 109 fahren die wenigstens zwei, vorzugsweise vier Arbeitssegmente 125 unter Verkleinerung des Arbeitsfluidabteils 109 und Vergrößerung des Konterarbeitsabteils 111 ineinander ein. Dabei drückt die Feder 115 auf das konterarbeitsabteilseitige Arbeitssegment 125 und drückt dieses in Arbeitsrichtung A in die weiteren Arbeitssegmente 125. Gemäß Fig. 10 ist ersichtlich, dass der Arbeitskolben 123 an einer Arbeitszylinderinnenseite 127 mittels eines Befestigungsabschnitts 129 des Arbeitskolbens 123 befestigt ist. Der Befestigungsabschnitt 129 verbleibt während des Bewegens des Arbeitskolbens 123 in dem Arbeitszylinder 3 im Wesentlichen ortsfest an dem Arbeitszylinder 3 befestigt. An den Befestigungsabschnitt 129 schließt ein Deformationsabschnitt 131 an, der sich dadurch kennzeichnet, dass er sich während des Betriebs ausdehnt, das heißt, die Arbeitssegmente 125 fahren auseinander aus, und während des EnergieAbgabebetriebs komprimiert, das heißt die Arbeitssegmente 125 fahren ineinander ein. Die Ausführung gemäß Fig. 11 unterscheidet sich von der Ausführung gemäß Fig. 10 im Wesentlichen ausschließlich dadurch, dass der Arbeitskolben 223 (Fig. 11) nicht aus teleskopartig ineinander ein- und auseinander ausfahrbaren Arbeitssegmenten 125 besteht (Fig. 10), sondern als im Wesentlichen das Arbeitsfluidabteil 109 begrenzender, elastisch deformierbarer Arbeitsbalg 223 ausgebildet ist. Der Arbeitsbalg 223 ist derart realisiert, dass er sich beim Einlassen des Arbeitsfluids in das Arbeitsfluidabteil 109 ausdehnt, und zwar in Richtung des Konterarbeitsabteils 111. Beim Herausdrücken des Arbeitsfluids aus dem Arbeitsfluidabteil 109 infolge der durch die Feder 115 bereitgestellten Spannkraft, insbesondere Deformationsrückstellkraft, komprimiert sich der elastische Arbeitsbalg 223 zurück unter Verkleinerung des Arbeitsfluidabteils 109. Dabei kann vorgesehen sein, dass sich der Arbeitsbalg 223 ballonartig aufbläht und dabei beim Einlassen des Arbeitsfluids in das Arbeitsfluidabteil 109 die Feder 115 in Richtung der Bodenfläche 122 des Konterarbeitsabteils 111 drückt bzw. vorspannt. Des Weiteren kann eine Entlüftungsvorrichtung 133 in das Arbeitsfluidabteil 109 integriert sein, beispielsweise um einen Druckausgleich zur Atmosphäre zu ermöglichen.

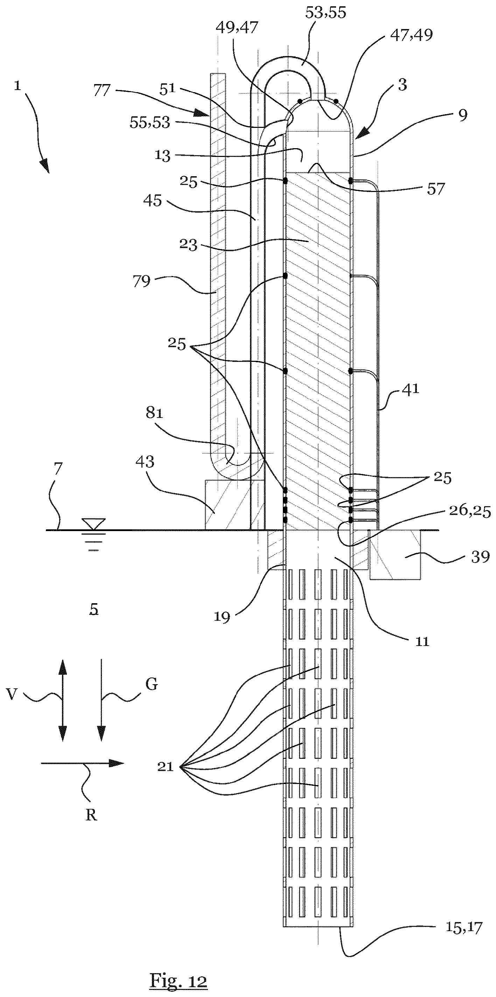

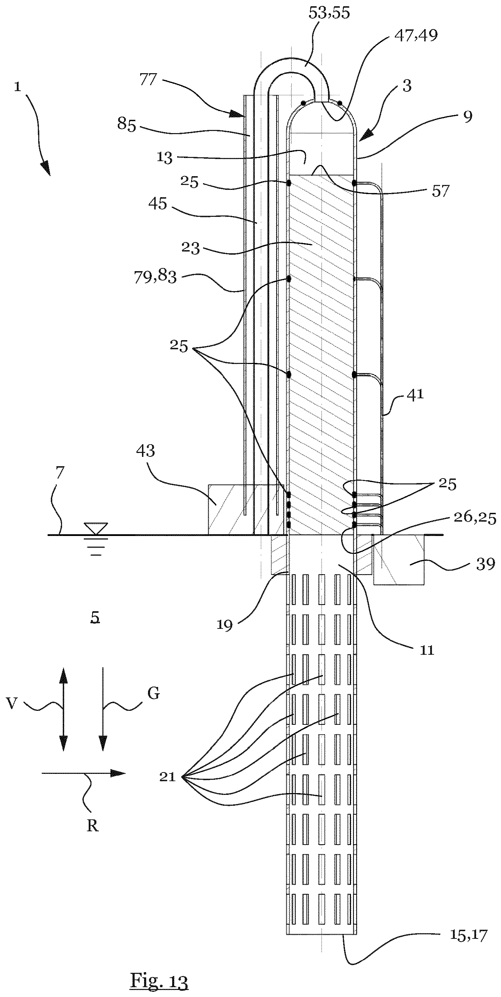

In Bezug auf Fig. 12 bis 13 wird eine beispielhafte Weiterbildung eines erfindungsgemäßen Pumpspeicherkraftwerks 1 gezeigt, wobei in Bezug auf die Fig. 12 eine erste Ausführung eines Wasserschlosses 77 dargestellt ist und in Bezug auf die Fig. 13 eine zweite Ausführung eines Wasserschlosses 77. Das Wasserschloss 77 dient im Allgemeinen dazu, auf das Pumpspeicherkraftwerk 1 wirkende Druckstöße aufzunehmen bzw. auszugleichen. Dies kann beispielsweise nötig sein, wenn der Energieabgabebetrieb unterbrochen wird, was dazu führt, dass eine freifallende Oberfluid- bzw. Arbeitsfluidwassersäule aufzufangen ist, um zu vermeiden, dass diese unter dem Einfluss ihrer Gewichtskraft hart auf ein stehendes Bauteil, beispielsweise einer Komponente der Pumpen-Turbinen-Einheit 43 aufprallt. Das Wasserschloss 77 umfasst im Wesentlichen eine zusätzlich zu dem Leitungssystem 45 der Pumpen-Turbinen-Einheit 43 vorgesehene Fluid- bzw. Ausgleichsleitung 79, in die das bereits aus dem Oberfluidabteil 9 bzw. Arbeitsfluidabteil 109 herausgedrückte bzw. abfließende Arbeitsfluid bzw. Oberfluid strömen soll, um damit eine Beschädigung der Pumpen-Turbinen-Einheit 43 zu vermeiden. Die als Hohlleitung ausgebildete Fluidleitung 79 wird durch das ausgetretene Oberfluid bzw. Arbeitsfluid geflutet, und zwar derart, dass das es in eine Vertikalhöhe entgegen der Gravitationsrichtung G verbracht wird, um die Strömungsenergie in Höhenenergie umzuwandeln bzw. abzubauen. Fig. 12 zeigt eine Ausführung des Wasserschlosses 77 mit einem im Wesentlichen U-förmigen Fluidleitungs-Abschnitt 81, der die Fluidleitung 79 mit dem Fluidleitungssystem 45 der Pumpen-Turbinen-Einheit 43 koppelt, um das Fluid in die Fluidleitung 79 zu verbringen und dort in Vertikalrichtung entgegen der Gravitationsrichtung zu bringen, so dass die Strömungsenergie in Höhenenergie umgewandelt wird.

Bei der Ausführung gemäß Fig. 13 ist statt der U-förmigen Anordnung 81 des Wasserschlosses 77 eine Rohr-in-Rohr-Konstruktion des Wasserschlosses 77 realisiert, in welcher die zusätzliche Fluidleitung 79 als Hohlleitung 83 realisiert ist, welche das Fluidleitungssystem 45 im Wesentlichen entlang dessen vollständiger Längserstreckung umfänglich umgibt und somit ein geschlossenes, das heißt zur Umgebung hin abgedichtetes, System ergibt. Auch bei dieser Konstruktion des Wasserschlosses 77 ist vorgesehen, dass das aus dem Oberfluidabteil 9 bzw. Arbeitsfluidabteil 109 ausgetretene Arbeitsfluid bzw. Oberfluid in den ringförmigen Rohrabschnitt 85, der sich zwischen dem Hohlleitung 83 und dem Fluidleitungssystem 45 ergibt, einströmt, und darin in Vertikalrichtung entgegen der Gravitationsrichtung G strömt, um Strömungsenergie in potentielle Energie umzuwandeln bzw. abzubauen. Ein Vorteil des erfindungsgemäßen Pumpspeicherkraftwerks 1 liegt beispielsweise in der einfachen Skalierbarkeit in Bezug auf dessen Größe und/oder Speicherkapazität. Beispielweise kann der Arbeitszylinder 3 einen Durchmesser bis zu 10 m besitzen, vorzugweise im Bereich von 1 m bis 5 m. Eine Gesamtlängserstreckung des Arbeitszylinders 3 kann Beispielsweise bis zu 100 m betragen, vorzugsweise im Bereich von 20 m bis 80 m liegen.

Der Schutzumfang ergibt sich aus den beigefügten Ansprüchen.

### Bezugszeichenliste

- 1: Pumpspeicherkraftwerk
- 3: Arbeitszylinder
- 5: Fluidreservoir
- 7: Fluidspiegel
- 9: Oberfluidabteil
- 11: Unterfluidabteil
- 13: Innenraum
- 15: Stirnseite
- 17: Öffnung
- 19: Mantel
- 21: Durchgangsöffnung
- 23: Auftriebskolben
- 25, 26: Dichtung
- 27: Mantelinnenfläche
- 29: Nut
- 31: Bauch
- 33, 35: Abschnitt
- 37: Hohlraum
- 39: Aktivierungsenergiequelle
- 41: Leitung
- 43: Pumpen-Turbinen-Einheit
- 45: Leitungssystem
- 47, 49: Ein-/Ausgang
- 53, 55: Zu-/Ablaufleitung
- 57: Stirnfläche
- 59: Schwimm-/Tauchkörper
- 61: Oberfluidabteilbereich
- 63: Verankerung
- 65: Grund
- 67: Ausgleichskörper
- 69: Zusatzkörper
- 71: Seilkonstruktion
- 73: Deckel
- 75: Becken
- 77: Wasserschloss
- 79: Fluidleitung
- 81: U-förmige Fluidleitung
- 83: Hohlleitung
- 85: Ringförmiger Rohrabschnitt
- 109: Arbeitsabteil
- 111: Konterarbeitsabteil
- 113: Stirnfläche
- 115: Elastizitätskomponente
- 117: Leitung
- 119: Anschluss
- 121: Stirnfläche
- 122: Bodenfläche
- 123: Arbeitskolben
- 125: Arbeitssegment
- 127: Mantelinnenfläche
- 129: Befestigungsabschnitt
- 131: Deformationsabschnitt
- 133: Entlüftungseinrichtung
- 223: Arbeitsbalg

- G: Gravitationsrichtung
- V: Verlagerungsrichtung
- R: Radialrichtung
- A: Arbeitsrichtung

## Patentansprüche

1. Pumpspeicherkraftwerk (1) umfassend:
- einen in ein Arbeitsfluidreservoir (5), wie einen Wasserspeicher, teilweise eingetauchten Arbeitszylinder (3) mit einem Oberfluidabteil (9) im Wesentlichen oberhalb eines Fluidspiegels (7) des Arbeitsfluidreservoirs (5) und einem Unterfluidabteil (11) im Wesentlichen unterhalb des Fluidspiegels;
- einen Auftriebskolben (23), der gegenüber dem Arbeitszylinder (3) in Gravitationsrichtung (G) beweglich geführt ist und derart das Oberfluidabteil (9) von dem Unterfluidabteil (11) abdichtet, dass ein gravitationsbedingter Fluidaustausch zwischen Oberfluidabteil (9) und Unterfluidabteil (11) verhindert ist;
- einen Energieladebetrieb, in dem Arbeitsfluid in das Oberfluidabteil (9) eingelassen wird, sodass unter dem Einfluss der Gewichtskraft und/oder des dynamischen Druckes des in das Oberfluidabteil (9) eingelassenen Oberfluids der Auftriebskolben (23) bezüglich des Fluidspiegels (7) in das Unterfluidabteil (11) eingetaucht wird; und
- einen Energieabgabebetrieb, in dem unter dem Einfluss der Auftriebskraft des Auftriebskolbens (23) Oberfluid aus dem Oberfluidabteil (9) herausgedrückt wird und/oder in dem eine während des Energieladebetriebs aufgebaute Fluidsäule des Oberfluids vorzugsweise konstant aus dem Oberfluidabteil (9) abfließt.

2. Pumpspeicherkraftwerk (1) nach Anspruch 1, wobei zum Abdichten des Oberfluidabteils gegen das Unterfluidabteil (11) wenigstens eine Dichtung (25, 26) zwischen Auftriebskolben (23) und Arbeitszylinder (3), vorzugsweise im Bereich des Fluidspiegels, angeordnet und derart aktivierbar, insbesondere hydraulisch und/oder pneumatisch beaufschlagbar, ist, dass die wenigstens eine Dichtung (25, 26) den Auftriebskolben (23) relativ zu dem Arbeitszylinder (3) festhält, vorzugsweise in dem Energieladebetrieb und/oder in dem Energieabgabebetrieb des Pumpspeicherkraftwerks (1), wobei insbesondere die wenigstens eine Dichtung (25, 26) in einer an einer Mantelinnenfläche (27) des Arbeitszylinders (3) und/oder einer Mantelaußenfläche des Auftriebskolbens (23) ausgebildeten Nut (29) aufgenommen ist, wobei sich die wenigstens eine Dichtung (25, 26) bei dessen Aktivierung in Richtung des Auftriebskolbens (23) und/oder des Arbeitszylinders (3) ausdehnt, um eine Haltekraft, wie eine Reibungskraft und/oder formschlussbedingte Kraft, zwischen Auftriebskolben (23) und Arbeitszylinder (3) vorzugsweise kontinuierlich aufzubauen.

3. Pumpspeicherkraftwerk (1) nach Anspruch 2, wobei eine Aktivierung der wenigstens einen Dichtung (25, 26) und ein Verlagern des Auftriebskolbens (23) zwischen der Energieladebetriebstellung und der Energieabgabebetriebstellung aufeinander abgestimmt sind und/oder wobei eine Aktivierungsenergiequelle (39), wie eine Pneumatik-, Elektronik- und/oder Hydraulikquelle, fluidal und/oder elektrisch mit der wenigstens einen Dichtung (25, 26) verbunden ist, um die wenigstens eine Dichtung (25, 26) zu aktivieren bzw. zu deaktivieren, insbesondere mit Aktivierungsfluid oder Strom zu beaufschlagen, wobei insbesondere die Aktivierungsenergiequelle (39) an eine Steuer- und/oder Regeleinrichtung zum vorzugsweise automatisierten Steuern und/oder Regeln der Aktivierungsenergiequelle (39), insbesondere zum Aktivieren bzw. Deaktivieren der wenigstens einen Dichtung, gekoppelt ist.

4. Pumpspeicherkraftwerk (1) nach einem der vorstehenden Ansprüche, wobei wenigstens eine Vorspanndichtung (25, 26) den Auftriebskolben (23) und den Arbeitszylinder (3) an einem dem Unterfluidabteil (11) abgewandten Ende des Auftriebskolbens (23) gegeneinander abdichtet und derart betreibbar ist, dass in der Energieabgabebetriebstellung des Auftriebskolbens (23) die wenigstens eine Vorspanndichtung (25, 26) zum Aufbau einer vorbestimmten Oberfluidsäule derart aktiviert ist, dass die Gewichtskraft des Oberfluids die Auftriebskraft des Auftriebskolbens (23) bezüglich des Arbeitsfluids beim Verlagern des Auftriebskolbens (23) bis zu einer End-Energieladebetriebstellung kontinuierlich übersteigt.

5. Pumpspeicherkraftwerk (1) nach einem der vorstehenden Ansprüche, wobei der Auftriebskolben (23) und/oder der Arbeitszylinder (3) an wenigstens einen außerhalb des Arbeitszylinders (3) angeordneten und wenigstens teilweise in das Arbeitsfluidreservoir (5) untergetauchten Zusatzkörper, beispielsweise ein Schwimmkörper, Tauchkörper und/oder Auftriebskörper, gekoppelt ist, vorzugsweise mittels einer Seilkonstruktion (71), wobei insbesondere der Zusatzkörper eine entgegengesetzt der Gewichtskraft des Oberfluids gerichtete Kraftkomponente dem Auftriebskolben (23) mitteilt, wobei insbesondere die Kraftkomponente einem Verlagern des Auftriebskolbens (23) von der Energieabgabebetriebstellung in die Energieladebetriebstellung entgegenwirkt.

6. Pumpspeicherkraftwerk (1) nach einem der vorstehenden Ansprüche, wobei eine insbesondere außerhalb des Arbeitsfluidreservoirs (5) angeordnete Pumpen-Turbinen-Einheit (43) in dem Energieladebetrieb Arbeitsfluid in das Oberfluidabteil (9) pumpt wobei insbesondere die Pumpen-Turbinen-Einheit (43) dazu eingerichtet ist, beim Einnehmen des Energieabgabebetriebs in einem Generatorbetrieb betreibbar zu sein, insbesondere um Strömungsenergie des aus dem Oberfluidabteil (9) herausgedrückten Oberfluids in mechanische Energie umzuwandeln, insbesondere um einen Stromgenerator anzutreiben.

7. Pumpspeicherkraftwerk (1) nach einem der vorstehenden Ansprüche, wobei der Arbeitszylinder, insbesondere das Oberfluidabteil, an einer dem Unterfluidabteil (11) abgewandten Seite geschlossen oder wenigstens teilweise geöffnet ist und/oder wobei der Arbeitszylinder (3) frei schwimmend in dem Arbeitsfluidreservoir (5) angeordnet ist oder fest in einem Grund (65) des Arbeitsfluidreservoirs (5) verankert ist und/oder wobei eine Auftriebskraft des Auftriebskolbens (23) bezüglich des in dem Arbeitsfluidreservoir (5) angeordneten Arbeitsfluids größer als die Gewichtskraft des Oberfluids in einer End-Energieabgabebetriebstellung des Auftriebskolbens (23) zum Verbringen des Auftriebskolbens (23) in die Energieladebetriebstellung ist, wobei insbesondere die Pumpen-Turbinen-Einheit (43) dazu eingerichtet ist, den Auftriebskraftüberschuss zu überwinden.

8. Pumpspeicherkraftwerk (1) umfassend:
- einen Arbeitszylinder (3) mit einem Arbeitsfluidabteil (109) und einem Konterarbeitsabteil (111),
- einen Arbeitskolben (123), der gegenüber dem Arbeitszylinder (3) in einer Arbeitsrichtung (A) bewegbar ist und derart das Arbeitsfluidabteil (109) von dem Konterarbeitsabteil (111) abdichtet, dass Fluidaustausch zwischen Arbeitsfluidabteil (109) und Konterarbeitsabteil (111) verhindert ist;
- einen Energieladebetrieb, in dem Fluid in das Arbeitsfluidabteil (109) eingelassen wird, sodass unter dem Einfluss des Fluiddrucks und der Gewichtskraft des in das Arbeitsfluidabteil (109) eingelassenen Arbeitsfluids der Arbeitskolben (123) in das Konterarbeitsabteil (111) unter Spannen des Arbeitskolbens (123), vorzugsweise unter Spannen einer Elastizitätskomponente (115) am Arbeitskolben (123) oder Eintauchen des Arbeitskolbens (123) in ein in das Konterarbeitsabteil (111) gefülltes Konterarbeitsfluid, bewegt wird; und
- einen Energieabgabebetrieb, in dem unter dem Einfluss der Spannkraft des gespannten Arbeitskolbens (123) Arbeitsfluid aus dem Arbeitsfluidabteil (109) herausgedrückt wird und/oder in dem eine während des Energieladebetriebs aufgebaute Fluidsäule des Arbeitsfluids vorzugsweise konstant aus dem Arbeitsfluidabteil (109) abfließt.

9. Pumpspeicherkraftwerk (1) nach Anspruch 8, wobei das Spannen des Arbeitskolbens (123) unter dem Einfluss der Gewichtskraft des Arbeitsfluids erfolgt und/oder wobei der Arbeitskolben (123) dazu eingerichtet ist, sich beim Einlassen des Arbeitsfluids in das Arbeitsfluidabteil (109) unter Vergrößerung des Arbeitsfluidabteils (109) zu deformieren, insbesondere auszudehnen, und sich beim Herausdrücken des Arbeitsfluids aus dem Arbeitsfluidabteil (109) unter Verkleinerung des Arbeitsfluidabteils (109) zurück zu deformieren, insbesondere zu komprimieren.

10. Pumpspeicherkraftwerk (1) nach einem der Ansprüche 8 oder 9, wobei der Arbeitskolben (123) wenigstens zwei teleskopartig bezüglich einander in Arbeitsrichtung (A) verlagerbare Arbeitssegmente (125) aufweist, die beim Einlassen des Arbeitsfluids in das Arbeitsfluidabteil (109) auseinander ausfahren und beim Herausdrücken des Arbeitsfluids aus dem Arbeitsfluidabteil (109) ineinander einfahren, wobei insbesondere das Arbeitsfluidabteil (109) im Wesentlichen von den wenigstens zwei Arbeitssegmenten (125) begrenzt ist und/oder wobei der Arbeitskolben (123) einen im Wesentlichen das Arbeitsfluidabteil (109) begrenzenden, elastisch deformierbaren Arbeitsbalg (223) umfasst, der sich beim Einlassen des Arbeitsfluids in das Arbeitsfluidabteil (109) ausdehnt und beim Herausdrücken des Arbeitsfluids aus dem Arbeitsfluidabteil (109) komprimiert.

11. Pumpspeicherkraftwerk (1) nach einem der Ansprüche 8 bis 10, wobei sich beim Spannen des Arbeitskolbens (123) eine Spannkraft aufbaut und/oder das Spannen des Arbeitskolbens (123) durch eine Feder erfolgt, wobei insbesondere die Feder sich an einer konterarbeitsabteilseitigen Stirnfläche des Arbeitskolbens (123) und an einer das Konterarbeitsabteil (111) begrenzenden Bodenfläche des Arbeitszylinders (3) abstützt, insbesondere derart abstützt, dass beim Einlassen des Arbeitsfluids in das Arbeitsfluidabteil (109) die Feder in Richtung der Bodenfläche des Arbeitszylinders (3) vorgespannt wird.

12. Verfahren zum Betreiben eines Pumpspeicherkraftwerks (1), bei dem
- zum Speichern von Energie Arbeitsfluid in ein Oberfluidabteil (9) eines in einem Arbeitsfluidreservoir (5) teilweise eingetauchten Arbeitszylinders (3) gefüllt wird, wobei das Oberfluidabteil (9) oberhalb eines Fluidspiegels (7) des Arbeitsfluidreservoirs (5) liegt und von einem Unterfluidabteil, das im Wesentlichen unterhalb des Fluidspiegels (7) liegt, durch einen Auftriebskolben (23) fluidisch getrennt wird, wobei unter dem Einfluss der Gewichtskraft und/oder des dynamischen Druckes des in das Oberfluidabteil (9) eingelassenen Oberfluids der Auftriebskolben (23) bezüglich des Fluidspiegels (7) in das Unterfluidabteil (11) eingetaucht wird; und
- zum Abgeben der Energie das Oberfluid unter Ausnutzung einer Auftriebskraft des Auftriebskolbens (23) von diesem aus dem Oberfluidabteil (9) herausgedrückt wird und/oder von einer konstanten Höhe abfließen kann.

13. Verfahren zum Betreiben eines Pumpspeicherkraftwerks (1), bei dem
- ein Arbeitszylinder (3) in ein Arbeitsfluidabteil (109) und ein Konterarbeitsabteil (111) mittels eines Arbeitskolbens (123) fluidisch unterteilt wird;
- zum Speichern von Energie Arbeitsfluid in das Arbeitsfluidabteil (109) gefüllt wird, sodass unter dem Einfluss des Fluiddrucks und der Gewichtskraft des in das Arbeitsfluidabteil (109) eingelassenen Arbeitsfluids der Arbeitskolben (123) in das Konterarbeitsabteil (111) unter Spannen des Arbeitskolbens (123), vorzugsweise unter Spannen einer Elastizitätskomponente (115) am Arbeitskolben (123) oder Eintauchen des Arbeitskolbens (123) in ein in das Konterarbeitsabteil (111) gefülltes Konterarbeitsfluid, bewegt wird; und
- zum Abgeben von Energie das in das Arbeitsfluidabteil (109) gefüllte Arbeitsfluid unter Ausnutzung einer Auftriebskraft des Arbeitskolbens, wie einer Spannkraft einer Elastizitätskomponente (115) am Arbeitskolben (123) und/oder einer Auftriebskraft des in ein, in das Konterarbeitsabteil (111) gefülltes Konterarbeitsfluid eingetauchten Arbeitskolbens, aus dem Arbeitsfluidabteil (109) herausgedrückt wird und/oder von einer konstanten Höhe abfließen kann.

14. Verfahren nach Anspruch 12 oder 13, das dazu eingerichtet ist, das Pumpspeicherkraftwerk (1) nach einem der Ansprüche 1 bis 11 zu realisieren.

15. Pumpspeichersystem, vorzugsweise Offshore-Pumpspeichersystem oder Onshore-Pumpspeichersystem, umfassend wenigstens zwei fluidal miteinander gekoppelte und nach einem der vorstehenden Ansprüche 1 bis 11 ausgebildete Pumpspeicherkraftwerke (1).

## Claims

1. Pumped storage power plant (1) comprising:
- a working cylinder (3) partially immersed in a working fluid reservoir (5), such as a water reservoir, with an upper fluid compartment (9) substantially above a fluid level (7) of the working fluid reservoir (5) and a lower fluid compartment (11) substantially below the fluid level;
- a buoyancy piston (23) which is movably guided with respect to the working cylinder (3) in the direction of gravity (G) and seals the upper fluid compartment (9) from the lower fluid compartment (11) in such a way that a gravitational fluid exchange between the upper fluid compartment (9) and the lower fluid compartment (11) is prevented;
- an energy charging mode in which working fluid is admitted into the upper fluid compartment (9), so that under the influence of the weight force and/or the dynamic pressure of the upper fluid admitted into the upper fluid compartment (9), the buoyancy piston (23) is immersed in the lower fluid compartment (11) with respect to the fluid level (7); and
- an energy output mode in which under the influence of the buoyancy force of the buoyancy piston (23), upper fluid is pushed out of the upper fluid compartment (9) and/or in which a fluid column of the upper fluid built up during the energy charging mode preferably flows off constantly from the upper fluid compartment (9).

2. Pumped storage power plant (1) according to Claim 1, wherein, in order to seal the upper fluid compartment with respect to the lower fluid compartment (11), at least one seal (25, 26) is arranged between the buoyancy piston (23) and the working cylinder (3), preferably in the area of the fluid level, and can be activated, in particular can be acted on hydraulically and/or pneumatically, in such a way that the at least one seal (25, 26) holds the buoyancy piston (23) in place relative to the working cylinder (3), preferably in the energy charging mode and/or in the energy output mode of the pumped storage power plant (1), wherein, in particular, the at least one seal (25, 26) is received in a groove (29) formed on a casing inner surface (27) of the working cylinder (3) and/or a casing outer surface of the buoyancy piston (23), wherein the at least one seal (25, 26) expands in the direction of the buoyancy piston (23) and/or of the working cylinder (3) when it is activated, in order to build up a holding force, such as a frictional force and/or a force caused by a form fit, between the buoyancy piston (23) and the working cylinder (3), preferably continuously.

3. Pumped storage power plant (1) according to Claim 2, wherein an activation of the at least one seal (25, 26) and a displacement of the buoyancy piston (23) between the energy charging mode position and the energy output mode position are coordinated with one another and/or wherein an activation energy source (39), such as a pneumatic, electronic and/or hydraulic source, is fluidically and/or electrically connected to the at least one seal (25, 26), in order to activate or deactivate the at least one seal (25, 26), in particular to act on it with activation fluid or current, wherein, in particular, the activation energy source (39) is coupled to a control and/or regulating device for preferably automated control and/or regulation of the activation energy source (39), in particular for activating or deactivating the at least one seal.

4. Pumped storage power plant (1) according to one of the preceding claims, wherein at least one prestressing seal (25, 26) seals the buoyancy piston (23) and the working cylinder (3) with respect to one another at an end of the buoyancy piston (23) facing away from the lower fluid compartment (11) and can be operated in such a way that, in the energy output mode position of the buoyancy piston (23), the at least one prestressing seal (25, 26) is activated in order to build up a predetermined upper fluid column in such a way that the weight force of the upper fluid continuously exceeds the buoyancy force of the buoyancy piston (23) with respect to the working fluid when displacing the buoyancy piston (23) as far as a final energy charging mode position.

5. Pumped storage power plant (1) according to one of the preceding claims, wherein the buoyancy piston (23) and/or the working cylinder (3) is coupled to at least one additional body, for example a floating body, immersion body and/or buoyancy body, arranged outside the working cylinder (3) and at least partially immersed in the working fluid reservoir (5), preferably by means of a cable construction (71), wherein, in particular, the additional body communicates a force component directed counter to the weight force of the upper fluid to the buoyancy piston (23), wherein, in particular, the force component counteracts a displacement of the buoyancy piston (23) from the energy output mode position into the energy charging mode position.

6. Pumped storage power plant (1) according to one of the preceding claims, wherein a pump-turbine unit (43) arranged, in particular, outside the working fluid reservoir (5) pumps working fluid into the upper fluid compartment (9) in the energy charging mode, wherein, in particular, the pump-turbine unit (43) is configured to be able to be operated in a generator mode when adopting the energy output mode, in particular in order to convert flow energy of the upper fluid pushed out of the upper fluid compartment (9) into mechanical energy, in particular in order to drive a current generator.

7. Pumped storage power plant (1) according to one of the preceding claims, wherein the working cylinder, in particular the upper fluid compartment, is closed or at least partially open on a side facing away from the lower fluid compartment (11) and/or wherein the working cylinder (3) is arranged in a freely floating manner in the working fluid reservoir (5) or is fixedly anchored in a base (65) of the working fluid reservoir (5) and/or wherein a buoyancy force of the buoyancy piston (23) with respect to the working fluid arranged in the working fluid reservoir (5) is greater than the weight force of the upper fluid in a final energy output mode position of the buoyancy piston (23) for bringing the buoyancy piston (23) into the energy charging mode position, wherein, in particular, the pump-turbine unit (43) is configured to overcome the excess buoyancy force.

8. Pumped storage power plant (1) comprising:
- a working cylinder (3) with a working fluid compartment (109) and a counter-working compartment (111),
- a working piston (123) which can be moved with respect to the working cylinder (3) in a working direction (A) and seals the working fluid compartment (109) from the counter-working compartment (111) in such a way that fluid exchange between the working fluid compartment (109) and the counter-working compartment (111) is prevented;
- an energy charging mode in which fluid is admitted into the working fluid compartment (109), so that under the influence of the fluid pressure and the weight force of the working fluid admitted into the working fluid compartment (109), the working piston (123) is moved into the counter-working compartment (111) while tensioning the working piston (123), preferably while tensioning an elasticity component (115) on the working piston (123) or immersing the working piston (123) in a counter-working fluid filled in the counter-working compartment (111); and
- an energy output mode in which under the influence of the tensioning force of the tensioned working piston (123), working fluid is pushed out of the working fluid compartment (109) and/or in which a fluid column of the working fluid built up during the energy charging mode preferably flows off constantly from the working fluid compartment (109).

9. Pumped storage power plant (1) according to Claim 8, wherein the working piston (123) is tensioned under the influence of the weight force of the working fluid and/or wherein the working piston (123) is configured to deform, in particular expand, when admitting the working fluid into the working fluid compartment (109) while enlarging the working fluid compartment (109), and to deform, in particular compress, back when pushing the working fluid out of the working fluid compartment (109) while reducing the size of the working fluid compartment (109).

10. Pumped storage power plant (1) according to either of Claims 8 and 9, wherein the working piston (123) has at least two working segments (125) which can be displaced telescopically with respect to one another in the working direction (A) and which extend apart when admitting the working fluid into the working fluid compartment (109) and retract into one another when pushing the working fluid out of the working fluid compartment (109), wherein in particular the working fluid compartment (109) is delimited substantially by the at least two working segments (125) and/or wherein the working piston (123) comprises an elastically deformable working bellows (223) which delimits substantially the working fluid compartment (109) and expands when admitting the working fluid into the working fluid compartment (109) and compresses when pushing the working fluid out of the working fluid compartment (109).

11. Pumped storage power plant (1) according to one of Claims 8 to 10, wherein a tensioning force builds up when tensioning the working piston (123) and/or the working piston (123) is tensioned by a spring, wherein in particular the spring is supported on a counter-working-compartment-side end face of the working piston (123) and on a bottom surface of the working cylinder (3) delimiting the counter-working compartment (111), in particular is supported in such a way that, when admitting the working fluid into the working fluid compartment (109), the spring is prestressed in the direction of the bottom surface of the working cylinder (3).

12. Method for operating a pumped storage power plant (1), in which
- for storing energy, working fluid is filled into an upper fluid compartment (9) of a working cylinder (3) partially immersed in a working fluid reservoir (5), wherein the upper fluid compartment (9) lies above a fluid level (7) of the working fluid reservoir (5) and is fluidically separated from a lower fluid compartment, which lies substantially below the fluid level (7), by a buoyancy piston (23), wherein under the influence of the weight force and/or the dynamic pressure of the upper fluid admitted into the upper fluid compartment (9), the buoyancy piston (23) is immersed in the lower fluid compartment (11) with respect to the fluid level (7); and
- for outputting the energy, the upper fluid is pushed out of the upper fluid compartment (9) by the buoyancy piston (23) using a buoyancy force of the latter and/or can flow off from a constant height.

13. Method for operating a pumped storage power plant (1), in which
- a working cylinder (3) is fluidically divided into a working fluid compartment (109) and a counter-working compartment (111) by means of a working piston (123);
- for storing energy, working fluid is filled into the working fluid compartment (109), so that under the influence of the fluid pressure and the weight force of the working fluid admitted into the working fluid compartment (109), the working piston (123) is moved into the counter-working compartment (111) while tensioning the working piston (123), preferably while tensioning an elasticity component (115) on the working piston (123) or immersing the working piston (123) in a counter-working fluid filled in the counter-working compartment (111); and
- for outputting energy, the working fluid filled in the working fluid compartment (109) is pushed out of the working fluid compartment (109) using a buoyancy force of the working piston, such as a tensioning force of an elasticity component (115) on the working piston (123) and/or a buoyancy force of the working piston immersed in a counter-working fluid filled in the counter-working compartment (111), and/or can flow off from a constant height.

14. Method according to Claim 12 or 13, which is designed to realize the pumped storage power plant (1) according to one of Claims 1 to 11.

15. Pumped storage system, preferably offshore pumped storage system or onshore pumped storage system, comprising at least two pumped storage power plants (1) which are fluidically coupled to one another and are designed according to one of the preceding Claims 1 to 11.

## Revendications

1. Centrale hydroélectrique de pompage-turbinage (1) comprenant :
- un vérin de travail (3) partiellement immergé dans un réservoir de fluide caloporteur (5), tel qu'un réservoir d'eau, comportant un compartiment de fluide supérieur (9) sensiblement situé au-dessus d'un niveau de fluide (7) du réservoir (5) et un compartiment de fluide inférieur (11) sensiblement situé en dessous du niveau de fluide ;
- un piston de flottaison (23), qui est mobile par rapport au vérin de travail (3) dans la direction de la gravité (G) et assure l'étanchéité entre le compartiment de fluide supérieur (9) et le compartiment de fluide inférieur (11) de manière à empêcher ainsi tout échange de fluide par gravité entre le compartiment de fluide supérieur (9) et le compartiment de fluide inférieur (11) ;
- une opération de charge d'énergie au cours de laquelle le fluide caloporteur est admis dans le compartiment de fluide supérieur (9) de telle sorte que, sous l'effet du poids et/ou de la pression dynamique du fluide supérieur (9) admis, le piston de flottaison (23) soit immergé dans le compartiment de fluide inférieur (11) par rapport au niveau de fluide (7) ; et
- une opération de décharge d'énergie au cours de laquelle, sous l'effet de la force de flottaison du piston de flottaison (23), le fluide supérieur est expulsé du compartiment de fluide supérieur (9) et/ou au cours de laquelle une colonne de fluide supérieur constituée pendant l'opération de charge d'énergie s'écoule de préférence du compartiment de fluide supérieur (9) à un débit constant.

2. Centrale hydroélectrique de pompage-turbinage (1) selon la revendication 1, dans laquelle au moins un joint (25, 26) est disposé entre le piston de flottaison (23) et le vérin de travail (3), de préférence au niveau de fluide, afin d'assurer l'étanchéité entre le compartiment de fluide supérieur et le compartiment de fluide inférieur (11) et est activable, notamment hydrauliquement et/ou pneumatiquement, de telle sorte qu'il maintienne le piston de flottaison (23) en position par rapport au vérin de travail (3), de préférence lors des opérations de charge et/ou de décharge d'énergie de la centrale hydroélectrique de pompage-turbinage (1), dans laquelle en particulier, au moins un joint (25, 26) est renfermé dans une rainure (29) formée sur une surface intérieure (27) du vérin de travail (3) et/ou sur une surface extérieure du piston de flottaison (23), dans laquelle au moins un joint (25, 26) se déplace dans la direction du piston de flottaison (23) et/ou le vérin de travail (3) se dilate pour générer une force de maintien, telle qu'une force de frottement et/ou une force de conjonction de forme, entre le piston de flottaison (23) et le vérin de travail (3), de préférence de manière continue.

3. Centrale hydroélectrique de pompage-turbinage (1) selon la revendication 2, dans laquelle une activation d'au moins un joint d'étanchéité (25, 26) et un déplacement du piston de flottaison (23) entre la position de charge d'énergie et la position de décharge d'énergie sont coordonnés et/ou dans laquelle une source d'énergie d'activation (39), telle qu'une source pneumatique, électronique et/ou hydraulique, est connectée fluidiquement et/ou électriquement à au moins un joint (25, 26) afin d'activer ou de désactiver au moins un joint, notamment par alimentation en fluide ou en courant d'activation, dans laquelle la source d'énergie d'activation (39) est en particulier couplée à un dispositif de commande et/ou de régulation permettant, de préférence, une commande et/ou une régulation automatisée de la source d'énergie d'activation (39), notamment pour l'activation ou la désactivation d'au moins un joint.

4. Centrale hydroélectrique de pompage-turbinage (1) selon une des revendications précédentes, dans laquelle au moins un joint de précharge (25, 26) assure l'étanchéité entre le piston de flottaison (23) et le vérin de travail (3) à une extrémité du piston de flottaison (23) opposée au compartiment de fluide inférieur (11) et est conçu de telle sorte que, lorsque le piston de flottaison (23) est en position de décharge d'énergie, au moins un joint de précharge (25, 26) soit activé afin de constituer une colonne de fluide supérieur prédéterminée, de sorte que le poids de fluide supérieur dépasse continuellement la force de flottaison du piston de flottaison (23) par rapport au fluide de travail lorsque le piston de flottaison (23) atteint sa position finale de charge d'énergie.

5. Centrale hydroélectrique de pompage-turbinage (1) selon une des revendications précédentes, dans laquelle le piston de flottaison (23) et/ou le vérin de travail (3) est couplé à au moins un corps additionnel, par exemple un flotteur, un corps submersible et/ou un corps de flottaison, disposé à l'extérieur du vérin de travail (3) et au moins partiellement immergé dans le réservoir de fluide caloporteur (5), de préférence au moyen d'un câble (71), dans laquelle le corps additionnel applique notamment au piston de flottaison (23) une force opposée au poids du fluide supérieur, dans laquelle la force s'oppose notamment à un déplacement du piston de flottaison (23) de la position de décharge d'énergie à la position de charge d'énergie.

6. Centrale hydroélectrique de pompage-turbinage (1) selon une des revendications précédentes, dans laquelle un groupe de pompage-turbinage (43), disposé notamment à l'extérieur du réservoir de fluide caloporteur (5), refoule le fluide caloporteur dans le compartiment de fluide supérieur (9) pendant la phase de charge, dans laquelle le groupe de pompage-turbinage (43) est notamment configuré pour fonctionner en mode générateur lorsqu'il fonctionne en mode de production d'énergie, notamment pour convertir l'énergie cinétique du fluide supérieur expulsé du compartiment de fluide supérieur (9) en énergie mécanique, en particulier pour entraîner un générateur électrique.

7. Centrale hydroélectrique de pompage-turbinage (1) selon une des revendications précédentes, dans laquelle le vérin de travail, notamment le compartiment de fluide supérieur, est fermé ou au moins partiellement ouvert du côté opposé au compartiment de fluide inférieur (11) et/ou dans laquelle le vérin de travail (3) est agencé pour flotter librement dans le réservoir de fluide de travail (5) ou est ancré dans une base (65) du réservoir de fluide de travail (5) et/ou dans laquelle une force de flottaison du piston de flottaison (23) par rapport au fluide de travail contenu dans le réservoir de fluide de travail (5) est supérieure au poids du fluide supérieur lorsque le piston de flottaison (23) est dans une position de décharge d'énergie finale, afin de déplacer le piston de flottaison (23) en position de charge d'énergie, dans laquelle notamment le groupe de pompage-turbinage (43) est configuré pour compenser la force de flottaison excédentaire.

8. Centrale hydroélectrique de pompage-turbinage (1) comprenant :
- un vérin de travail (3) doté d'un compartiment de fluide de travail (109) et d'un compartiment de contre-travail (111),
- un piston de travail (123), qui est mobile par rapport au vérin de travail (3) dans une direction de fonctionnement (A) et assure l'étanchéité entre le compartiment de fluide de travail (109) et le compartiment de contre-travail (111), de telle sorte que tout échange de fluide entre le compartiment de fluide de travail (109) et le compartiment de contre-travail (111) soit empêché ;
- une opération de charge d'énergie au cours de laquelle un fluide est admis dans le compartiment de fluide de travail (109) de sorte que, sous l'effet de la pression et du poids du fluide admis dans le compartiment de fluide de travail (109), le piston de travail (123) soit déplacé dans le compartiment de contre-travail (111) par mise en tension du piston de travail (123), de préférence par mise en tension d'un élément élastique (115) sur le piston de travail (123) ou par immersion du piston de travail (123) dans un fluide de contre-travail contenu dans le compartiment de contre-travail (111) ; et
- une opération de décharge d'énergie au cours de laquelle, sous l'effet de la force de tension exercée sur le piston de travail (123) mis en tension, le fluide de travail est expulsé du compartiment de fluide de travail (109) et/ou au cours de laquelle une colonne de fluide de travail formée lors de l'opération de charge d'énergie s'écoule de préférence du compartiment de fluide de travail (109) à un débit constant.

9. Centrale hydroélectrique de pompage-turbinage (1) selon la revendication 8, dans laquelle la mise en tension du piston de travail (123) est réalisée sous l'effet du poids du fluide caloporteur et/ou dans laquelle le piston de travail (123) est configuré pour se déformer, notamment pour se dilater, lorsque le fluide caloporteur est admis dans le compartiment de fluide caloporteur (109), en augmentant ainsi le volume du compartiment de fluide caloporteur (109), et pour se déformer, notamment pour se comprimer, lorsque le fluide caloporteur est expulsé du compartiment de fluide caloporteur (109), en réduisant ainsi le volume du compartiment de fluide caloporteur (109).

10. Centrale hydroélectrique de pompage-turbinage (1) selon une des revendications 8 ou 9, dans laquelle le piston de travail (123) comporte au moins deux segments de travail télescopiques (125) l'un par rapport à l'autre dans la direction de fonctionnement (A), qui s'écartent lorsque le fluide de travail est admis dans le compartiment de fluide de travail (109) et se rétractent lorsque le fluide de travail est expulsé du compartiment de fluide de travail (109), dans laquelle le compartiment de fluide de travail (109) est notamment délimité par au moins deux segments de travail (125) et/ou dans laquelle le piston de travail (123) comprend un soufflet de travail élastiquement déformable (223) délimitant sensiblement le compartiment de fluide de travail (109), qui se dilate lorsque le fluide de travail est admis dans le compartiment de fluide de travail (109) et se rétracte lorsque le fluide de travail est expulsé du compartiment de fluide de travail (109).

11. Centrale hydroélectrique de pompage-turbinage (1) selon une des revendications 8 à 10, dans laquelle une force de tension se crée lorsque le piston de travail (123) est mis en tension et/ou la tension du piston de travail (123) est assurée par un ressort, dans laquelle le ressort est notamment supporté par une face d'extrémité du piston de travail (123) du côté du compartiment de contre-travail et par une surface inférieure du vérin de travail (3) qui délimite le compartiment de contre-travail (111), de telle sorte que, lorsque le fluide de travail est admis dans le compartiment de fluide de travail (109), le ressort soit précontraint dans la direction de la surface inférieure du vérin de travail (3).

12. Procédé d'exploitation d'une centrale hydroélectrique de pompage-turbinage (1), dans lequel
- un fluide de travail est introduit dans un compartiment de fluide supérieur (9) d'un vérin de travail (3) partiellement immergé dans un réservoir de fluide de travail (5) afin de stocker de l'énergie, dans lequel le compartiment de fluide supérieur (9) est situé au-dessus du niveau de fluide (7) du réservoir de fluide de travail (5) et est séparé fluidiquement par un piston de flottaison (23), d'un compartiment de fluide inférieur, situé sensiblement en dessous du niveau de fluide (7), dans lequel, sous l'effet du poids et/ou de la pression dynamique du compartiment de fluide supérieur (9), le piston de flottaison (23) est immergé dans le compartiment de fluide inférieur (11) par rapport au niveau du fluide (7) ;
- pour libérer l'énergie, le fluide supérieur est expulsé du compartiment de fluide supérieur (9) par le piston de flottaison (23) grâce à la poussée d'Archimède et/ou peut s'écouler d'une hauteur constante.

13. Procédé d'exploitation d'une centrale hydroélectrique de pompage-turbinage (1), dans laquelle
- un vérin de travail (3) est divisé fluidiquement en un compartiment de fluide de travail (109) et un compartiment de contre-travail (111) au moyen d'un piston de travail (123) ;
- pour stocker de l'énergie, le fluide de travail est introduit dans le compartiment de fluide de travail (109) de sorte que, sous l'influence de la pression du fluide et du poids du fluide de travail admis dans le compartiment de fluide de travail (109), le piston de travail (123) soit déplacé dans le compartiment de contre-travail (111) en mettant en tension le piston de travail (123), de préférence en mettant en tension un élément élastique (115) sur le piston de travail (123) ou en immergeant le piston de travail (123) dans un fluide de contre-travail contenu dans le compartiment de contre-travail (111) ; et
- pour libérer de l'énergie, le fluide de travail contenu dans le compartiment de fluide de travail (109) est expulsé du compartiment de fluide de travail (109) par la force de flottaison du piston de travail, telle que une force de tension d'un élément élastique (115) sur le piston de travail (123) et/ou une force de flottaison du piston de travail immergé dans un fluide de contre-travail contenu dans le compartiment de fluide de contre-travail (111) et est expulsé du compartiment de fluide de travail (109) et/ou peut s'écouler d'une hauteur constante.

14. Procédé selon la revendication 12 ou 13, qui est configuré pour mettre en œuvre la centrale de pompage-turbinage (1) selon une quelconque des revendications 1 à 11.

15. Système de pompage-turbinage, de préférence en mer ou à terre, comprenant au moins deux centrales hydroélectriques de pompage-turbinage (1) couplées fluidiquement et conçues selon une des revendications 1 à 11 précédentes.
